# EUROPEAN PATENT APPLICATION

(11) **EP 1 591 918 A1**
(43) Date of publication of application: **02.11.2005**
(21) Application number: 04708479.3
(22) Date of filing: 05.02.2004
(51) Int. Cl.: G06F 17/30, G10K 15/02, H04N 5/76, H04N 7/173

(54) **INFORMATION PROCESSING DEVICE, METHOD, AND PROGRAM**

(30) Priority: 05.02.2003 JP 2003028352
(71) Applicant: SONY CORPORATION, Tokyo 141-0001 (JP)
(72) Inventor: TAKIMOTO, Yuuji, Sony Corporation, Tokyo 1410001 (JP); OGAWA, Kazuyuki, Sony Corporation, Tokyo 1410001 (JP); SUGIMOTO, Kayo, Sony Corporation, Tokyo 1410001 (JP); SATO, Makoto, Sony Corporation, Tokyo 1410001 (JP)
(74) Representative: Leppard, Andrew John
(86) International application number: PCT/JP2004/001214
(87) International publication number: WO 2004/070631

(57) **Abstract**

The present invention relates to an information processing apparatus and method and a program, allowing a user to efficiently and quickly select predetermined content such as content to play and content to purchase. When it is instructed to turn on a power, key information and additional information stored in a key/additional information storing unit 122 is read. The read key information and additional information is transmitted to an Internet server 53 and a home server 64, and it is requested to perform a content search based on the key information and additional information. Information representing search results is acquired by a display data generating unit 123, and a screen based on display data generated from the search results is displayed on a display 82. A user selects predetermined content from a list displayed on the display 82 to view it. The present invention is applicable to an information processing apparatus such as a personal computer and various home electronic appliances capable of playing content.

## Description

### TECHNICAL FIELD

The present invention relates to an information processing apparatus and method, and a program, and more particularly to an information processing apparatus and method and a program capable of selecting favorite content more efficiently and quickly.

### BACKGROUND ART

With the recent development in various technologies such as communications technologies, it is prevailing that data of music, moving images or still images is stored in a personal computer and a user listens to it or views them on a television or the like.

The user can manage centrally various contents (data of music, moving images, still images and the like) on a personal computer. Instead of personally enjoying these contents on a personal computer or the like, a plurality of persons can listen to or view these contents on a television.

If contents are managed centrally on a personal computer or the like, it becomes more difficult to search desired content as the number of contents increases. In order to allow a user to search desired content efficiently, for example, Published Japanese Patent Application (KOKAI) No. 2002-108923 discloses a system in which a server for managing a user access history proposes to a user terminal apparatus the next access destination of a Web page (content) selected on the basis of the access history.

The system disclosed in Published Japanese Patent Application (KOKAI) No. 2002-108923 has, however, an issue that although the system can propose content matching user preference up to date (in the past), it cannot propose optimum content matching current (present) user preference.

Namely, although user preference at a certain point can be estimated more or less from the past history, the proposed content may be different from the current user preference.

In addition, in a case where various contents are proposed in accordance with a user access history in this manner or where various contents are managed centrally on a personal computer as described above, there is also an issue that a user is required to perform a cumbersome operation to select predetermined content.

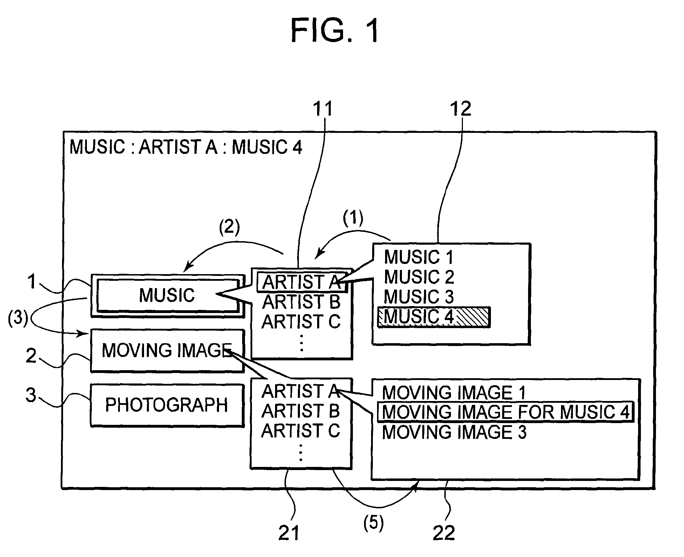

Fig. 1 is a diagram showing a display example of a content selection screen.

In Fig. 1, a music button 1, a moving image button 2 and a photograph button 3 are buttons which are operated when content to be displayed is selected from music contents, moving image contents and still image contents, respectively. Namely, a user can select favorite content from music contents, moving image contents and still image contents stored in a personal computer or the like by using the selection screen shown in Fig. 1, and listen to or view the selected content.

A window 11 shown in Fig. 1 is a window displaying a list of artists whose music contents are registered in a case where the music button 1 is selected. A window 21 is a window displaying a list of artists whose moving image contents in a case where the moving image button 2 is selected.

For example, as shown in Fig. 1, in a case where moving images for the content [music 4] (moving images in a moving image list 22 displayed when the artist A is selected in the window 21) are to be played in a state that content [music 4] is selected from a music list 12 (list of music programs of an artist A) displayed when the artist A is selected, it is necessary that a user operates a remote controller or the like to switch a content category to [moving image], thereafter selects the artist A in the displayed window 21, and further selects [moving image for music 4] related to [music 4] from the moving image list 22 (it is necessary that a cursor is moved in the order from an arrow (1) to an arrow (5) in Fig. 1).

Namely, the user cannot select desired content efficiently.

In the state that [music 4] is selected in the music list 12, in a case where moving images for the music 4 can be selected directly, it is expected that an operation burden is reduced and a user can select desired content efficiently.

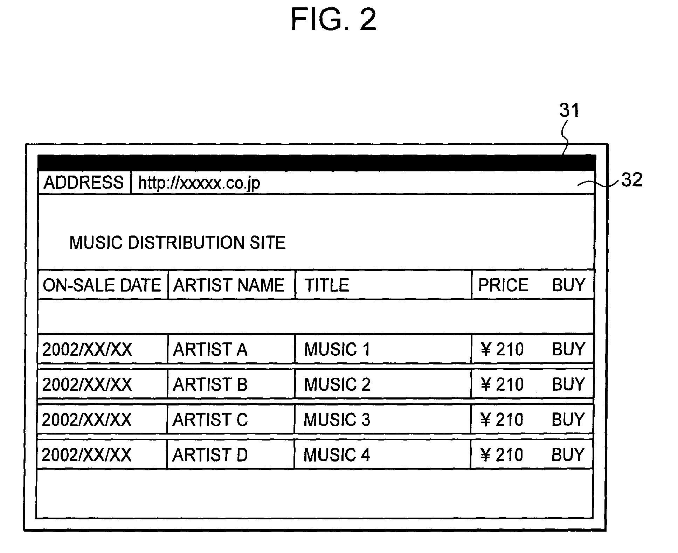

In a case where new music content is to be added to a personal computer, for example, it is necessary for a user to activate a browser 31 and input an address of a music distribution site into an address input field 32 of the browser, as shown in Fig. 2. The user is further required to confirm whether the contents displayed in a list of music contents sold at the site are already possessed by the user and select content not yet possessed. Namely, even addition of content cannot be performed efficiently by a user.

### DISCLOSURE OF THE INVENTION

The present invention has been made in consideration of the circumstances described above and allows a user to efficiently and quickly select predetermined content such as content to play and content to purchase.

An information processing apparatus of the present invention is characterized by having: display control means that displays a selection screen being a content selection screen in which metadata as data affixed to content is arranged, having at least an area in which the metadata for designating an information acquisition range is arranged and an area to be used for designation of other metadata and display of a search result; acquiring means that acquires, when predetermined one of the metadata is selected from the selection screen displayed by the display control means, information on another content having same metadata as the selected metadata; and output means that displays the information acquired by the acquiring means and outputting the other content in response to an instruction of an output of the other content.

The information processing apparatus of the present invention may further have storing means that stores the metadata selected from the selection screen. In this case, when the information processing apparatus is activated, the acquiring means acquires information on other content having same metadata as the metadata stored in the storing means.

When the metadata for designating the information acquisition range is selected, the acquiring means may acquire information on the other content in a range designated by the selected metadata.

The information processing apparatus of the present invention may further have detecting means that detects a selection of the metadata. The detecting means detects a selection of the metadata in response to a motion of a cursor displayed on the selection screen.

The acquiring means may acquire information on the other content from an information managing apparatus connected via a network.

When the information processing apparatus is activated, the acquiring means may acquire information on other content having same metadata as the metadata recorded in storing means of the information managing apparatus.

An information processing method for an information processing apparatus of the present invention is characterized by including: a display control step of displaying a selection screen being a content selection screen in which metadata as data affixed to content is arranged, having at least an area in which the metadata for designating an information acquisition range is arranged and an area to be used for designation of other metadata and display of a search result; an acquiring step of, when predetermined one of the metadata is selected from the selection screen displayed by a process in the display control step, acquiring information on another content having same metadata as the selected metadata; and an output step of displaying the information acquired by a process in the acquiring step and outputting the other content in response to an instruction of an output of the other content.

A program of the present invention is characterized by including: a display control step of displaying a selection screen being a content selection screen in which metadata as data affixed to content is arranged, having at least an area in which the metadata for designating an information acquisition range is arranged and an area to be used for designation of other metadata and display of a search result; an acquiring step of, when a predetermined one of the metadata is selected from the selection screen displayed by a process in the display control step, acquiring information on other content having same metadata as the selected metadata; and an output step of displaying the information acquired by a process in the acquiring step and outputting the other content in response to an instruction of an output of the other content.

In the information processing apparatus and method and the program of the present invention, when the selection screen being a content selection screen in which metadata as data affixed to the content is arranged, is displayed, the selection screen having at least the area in which the metadata for designating an information acquisition range is arranged and the area to be used for designation of other metadata and display of a search result, and predetermined metadata is selected from the displayed selection screen, the information on the other content having the same metadata as the selected metadata is acquired. The acquired metadata is displayed and the other content is output in response to an instruction of an output of the other content.

### BRIEF DESCRIPTION OF THE DRAWINGS

Fig. 1 is a diagram showing an example of a conventional content selection screen.
Fig. 2 is a diagram showing an example of a conventional content purchase screen.
Fig. 3 is a diagram showing a configuration example of a content search system to which the present invention is applied.
Fig. 4 is a diagram showing an example of a screen of a display.
Fig. 5 is a diagram showing an example of an outer appearance of a remote controller.
Fig. 6 is a diagram illustrating an example of an operation of a content search system shown in Fig. 3.
Fig. 7 is a diagram showing an example of information stored in a key/additional information storing unit.
Fig. 8 is a diagram showing an example of content.
Fig. 9 is a diagram illustrating another example of the operation of the content search system shown in Fig. 3.
Fig. 10 is a block diagram showing an example of the structure of an information processing apparatus.
Fig. 11 is a block diagram showing an example of a functional structure of the information processing apparatus.
Fig. 12 is a diagram showing an example of an operation history.
Fig. 13 is a block diagram showing an example of the functional structure of a home server.
Fig. 14 is a flowchart illustrating an activation process of the information processing apparatus.
Fig. 15 is a diagram showing an example of a screen of the display.
Fig. 16 is a diagram showing an example of an outer appearance of the remote controller.
Fig. 17 is a diagram showing another example of a screen of the display.
Fig. 18 is a diagram showing an example of an outer appearance of the remote controller.
Fig. 19 is a diagram showing another example of a screen of the display.
Fig. 20 is a diagram showing an example of a screen of the display.

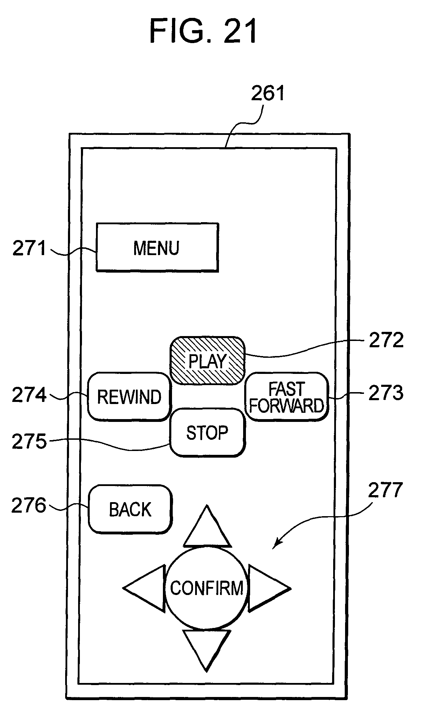

Fig. 21 is a diagram showing an example of an outer appearance of the remote controller.
Fig. 22 is a diagram showing another example of a screen of the display.
Fig. 23 is a flowchart illustrating a display switching process of the information processing apparatus.
Fig. 24 is a flowchart illustrating a process to be executed between the information processing apparatus and an information managing apparatus.
Fig. 25 is a diagram showing another example of a screen of the display.
Fig. 26 is a diagram showing an example of the display to be displayed by the process shown in Fig. 24.
Fig. 27 is a diagram showing another example of a screen of the display.
Fig. 28 is a flowchart illustrating another process to be executed between the information processing apparatus and the information managing apparatus.
Fig. 29 is a diagram showing an example of the display to be displayed by the process shown in Fig. 28.
Fig. 30 is a diagram showing another example of a screen of the display.
Fig. 31 is a flowchart illustrating still another process to be executed between the information processing apparatus and the information managing apparatus.
Fig. 32 is a diagram showing an example of the display to be displayed by the process shown in Fig. 31.
Fig. 33 is a flowchart illustrating a process to be executed between the information processing apparatus and the information managing apparatus.
Fig. 34 is a diagram showing an example of the display to be displayed by the process shown in Fig. 33.
Fig. 35 is a diagram showing an example of a screen of the display.
Fig. 36 is a diagram showing another example of a screen of the display.
Fig. 37 is a diagram showing still another example of a screen of the display.
Fig. 38 is a flowchart illustrating a process to be executed between the information processing apparatus and the information managing apparatus.
Fig. 39 is a diagram showing an example of the display to be displayed by the process shown in Fig. 38.
Fig. 40 is a flowchart illustrating a process to be executed between the information processing apparatus and the information managing apparatus.
Fig. 41 is a diagram showing an example of the display to be displayed by the process shown in Fig. 40.
Fig. 42 is a diagram illustrating an example of an operation of a content search system.
Fig. 43 is a diagram illustrating another example of the operation of the content search system.

### BEST MODE FOR CARRYING OUT THE INVENTION

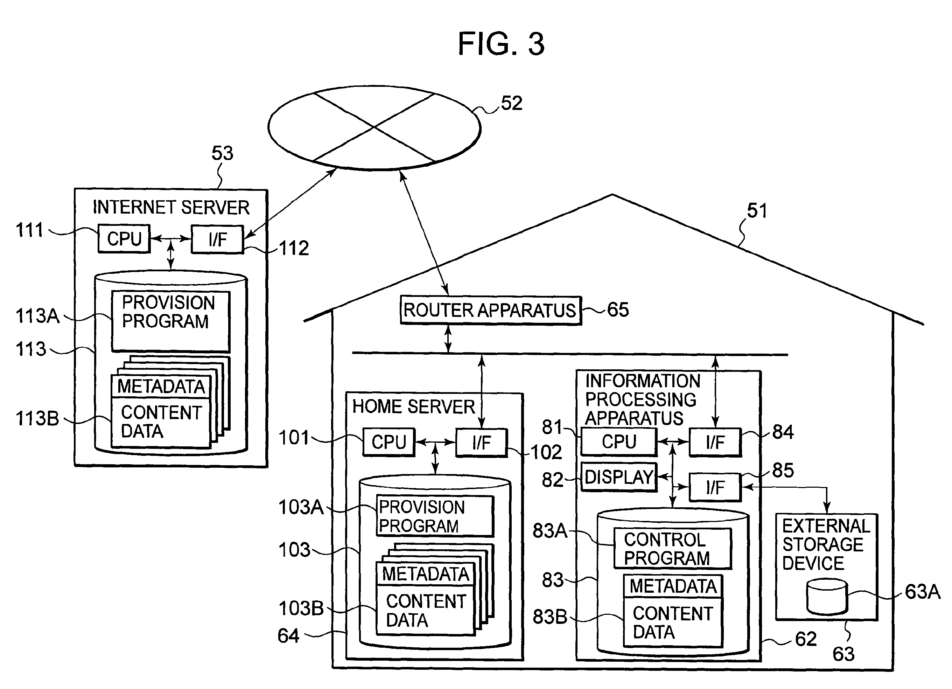

Fig. 3 is a diagram showing the configuration example of a content providing system to which the present invention is applied.

A home network 61 is configured in a house 51, the home network being a wireless LAN (Local Area Network) in conformity with, for example, IEEE (Institute of Electrical and Electronics Engineers) 802.11a, 802.11b.

An information processing apparatus 62 and a home server 64 are connected to the home network 61 via an interface (I/F) 84 and an interface (I/F) 102, respectively. The home network 61 is connected to the Internet 52 via a router apparatus 65.

A user can use various contents by using the information processing apparatus 62, the contents being stored in a storing unit 83, an external storage device 63 connected to the information processing apparatus 62 via an interface 85, and an Internet server (server deployed on the Internet) 53 connected to the home server 64 and the Internet 52.

As shown in Fig. 3, the storing unit 83 stores a control program 83A and content 83B, the control program controlling a process of requesting another apparatus to search contents, and other processes. Various contents are also stored in a database 63A structured in the external storage device 63.

Similarly, a database 103 of the home server 64 stores a provision program 103A and content 103B, the control program controlling a process of providing content, and other processes. A database 113 of the Internet server 53 stores a provision program 113A and content 113B.

In the following, the Internet server 53 and the home server 64 are collectively called an information management apparatus when it is unnecessary to distinguish therebetween.

Content stored in the storing units and databases is data including music data, moving image data, still image data, game software data, Web content (HTML (Hyper Text Markup Language) content) data and the like.

The information processing apparatus 62 searches content stored in the storing unit 83, the external storage device 63 and the information managing apparatus (Internet server 53 and home server 64) in accordance with predetermined key information and additional information, for example, when a user instructs to use the content.

As will be later detailed, the key information and the additional information used for search is decided when a user operates a remote controller and switches a selection subject with a cursor, or upon other events.

The information processing apparatus 62 presents information such as a title of content acquired through a search to a user, and when the user instructs to play predetermined content, acquires the content and starts playing. Namely, the information processing apparatus 62 displays moving images, still images or the like designated by the user on a display 82, or outputs designated music from an unillustrated speaker.

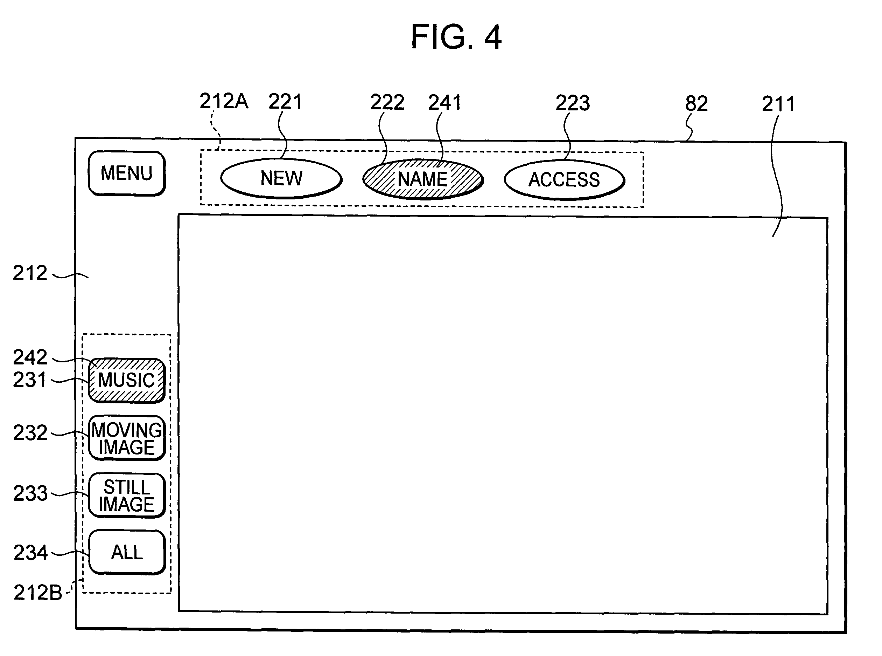

Fig. 4 is a diagram showing an example of the layout of a display screen of the display 82.

A content selection/display area 211 is formed substantially in a central area of the display 82 to display a list of content search results acquired in the manner described above, and the like. A menu display area 212A in which various buttons operated at the time of switching a screen in the content selection/display area 211 are disposed is formed above the content selection/display area 211. A related information designating area 212B is formed to the left of the content selection/display area 211 to be used as means for designating additional information for a content search.

In Fig. 4, although the menu display area 212A and the related information designating area 212B are surrounded by broken lines, these broken lines are drawn to indicate a range of each area and are not displayed actually on the display 82. In the following, the menu display area 212A and the related information designating area 212B are collectively called an area 212 where appropriate.

As a search is conducted by designating additional information with a category designating button in the related information designating area 212B, search results are switched, for example, from [music] to [moving image], resulting in a display switch, similar to operating a button in the menu display area 212A. The screen of the display 82 will be later described in detail.

The category is metadata representative of the type of each content such as [music], [moving image] and [still image], and is used for designating an information acquisition range for selecting content.

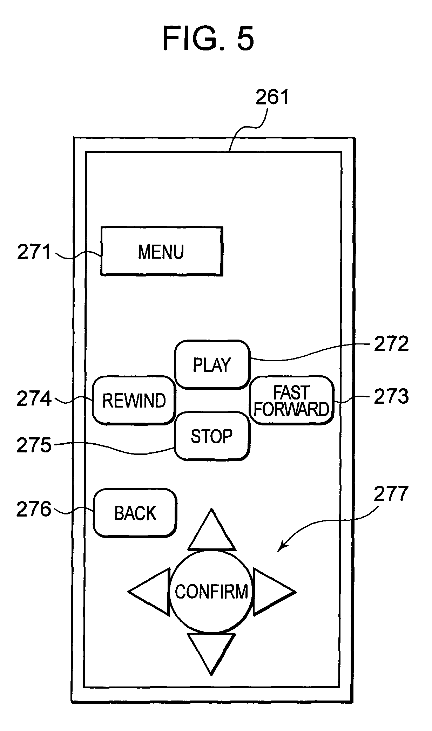

Fig. 5 is a diagram showing an outer appearance of a remote controller 261 to be used by a user of the information processing apparatus 62.

A menu button 271 is mounted on a housing of the remote controller 261, which is operated to make active a cursor 241 in the menu display area 212A and a cursor 242 in the related information designating area 212B, in a state that the content selection/display area 211 in Fig. 4 is active. For example, the menu button 271 performs switching by a toggle operation, when the menu button 271 is depressed once, the cursors 241 and 242 are made active, and when the menu button 271 is depressed next, the content selection/display area 211 becomes active.

In a substantially central area of the housing of the remote controller 261, a play button 272, a fast forward button 273, a rewind button 274 and a stop button 275 are disposed. The play button is operated to instruct playing content (moving image content or music content). The fast forward button is operated to instruct fast forward. The rewind button is operated to instruct rewind. The stop button is operated to instruct stop of content in play.

In a lower area of the remote controller 261, a back button 276 and a cross confirm button 277 are disposed. The back button is operated to instruct an operation cancel. The cross confirm button is constituted of a cross key to be operated to instruct a motion of cursors and a confirm button to be operated to instruct confirmation.

When a user depresses any one of these buttons, a command corresponding to the depressed button is emitted from an unillustrated emission port to the information processing apparatus 62 by using an infrared ray.

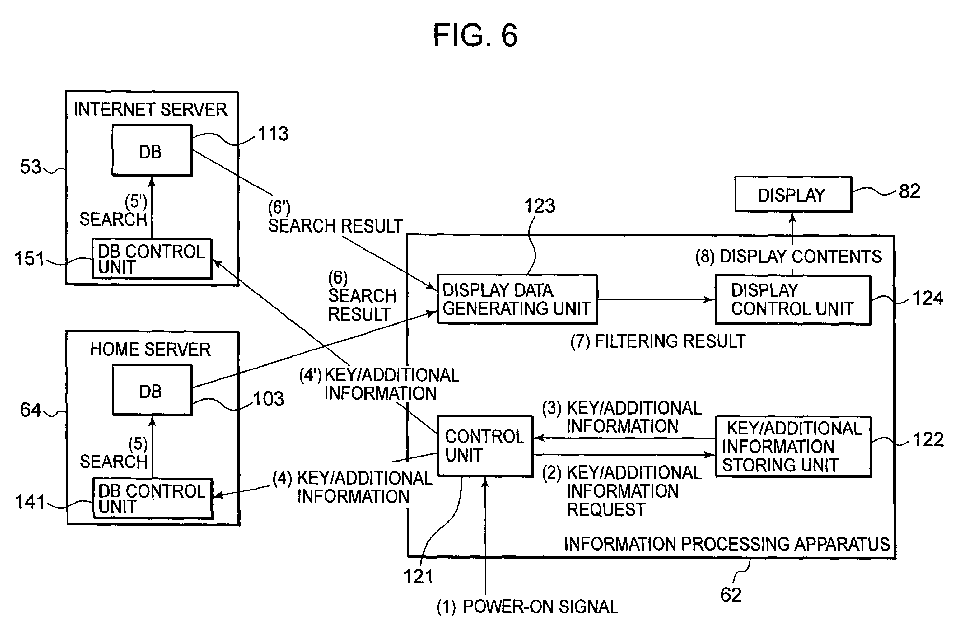

Fig 6 is a diagram illustrating an example of an operation of the content providing system shown in Fig. 3, to be executed upon start-up of the information processing apparatus 62.

A control unit 121, a key/additional information storing unit 122, a display data generating unit 123 and a display control unit 124 of the information processing apparatus 62 are realized by making a CPU (Central Processing Unit) 81 (Fig. 3) run the control program 83A. A database (DB) control unit 151 of the Internet server 53 is realized by making a CPU 111 run the provision program 113A. A database control unit 141 of the home server 64 is realized by making a CPU 101 run the provision program 103A.

When power-on is instructed (arrow (1) in Fig. 6), the control unit 121 requests the key/additional information storage device 122 to notify key information and additional information presently stored (arrow (2)).

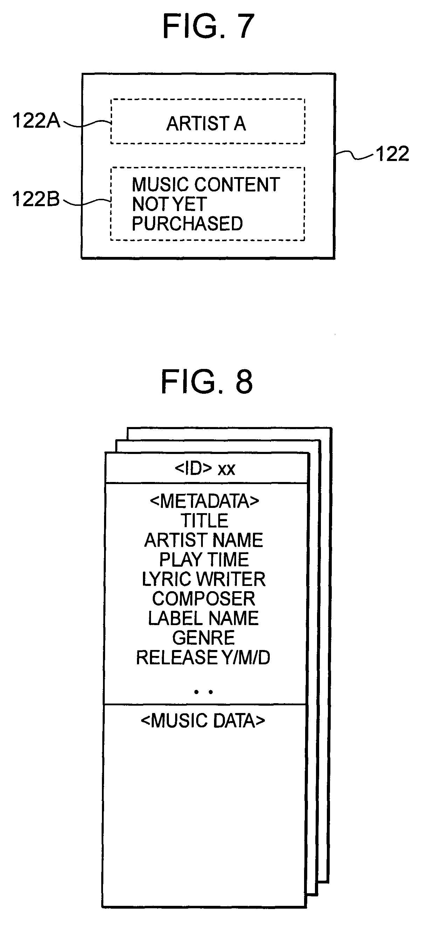

Fig. 7 is a diagram showing an example of information stored in the key/additional information storing unit 122.

In the example shown in Fig. 7, [artist A] is stored as key information 122A and [music] and [content not yet purchased] are stored as additional information 122B.

The key information is information used as a search criterion (key). For example, each content such as music data and image data contains metadata affixed to the content. In a content search to be conducted by the Internet server 53 or the like, content having the same metadata as that selected as the key information are extracted as a search result.

In the content search, the additional information used together with the key information is, for example, information for designating a search range corresponding to information for designating a category of content or the like.

Therefore, in a case that the key information 122A and the additional information 122B shown in Fig. 7 is stored in the key/additional information storing unit 122, the search on the basis of this information is for [music content] in the range of [content not yet purchased] by a user of the information processing apparatus 62, and music content having [artist A] in the metadata is extracted as the search result.

Fig. 8 is a diagram showing an example of music content.

As shown in Fig. 8, the music content is basically constituted of a content ID, metadata and music data. Similarly, the image content (moving image content, still image content) is also constituted of a content ID, metadata and image data. Metadata affixed to the music content shown in Fig. 8 includes information on a music title, an artist name, a play time, a lyric writer name, a composer name, a label name, a genre, a released date Y/M/D and the like.

Reverting to the description of Fig. 6, when key information and additional information notified from the key/additional information storing unit 122 is acquired (arrow (3)), the control unit 121 notifies the home server 64 of the acquired key information and additional information to request for a content search on the basis of the key information and the additional information (arrow (4)). The control unit 122 also notifies the Internet server 53 of the key information and the additional information to request for a content search on the basis of the key information and additional information (arrow (4')).

The database control unit 141 of the home server 64 searches contents stored in the database 103 (arrow (5)) to extract predetermined content, and transmits information on the extracted content as the search result to the display data generating unit 123 of the information processing apparatus 62 (arrow (6)).

Similarly, the database control unit 151 of the Internet server 53 searches contents stored in the database 113 (arrow (5')) and transmits information on the extracted content as the search result to the display data generating unit 123 of the information processing apparatus 62 (arrow (6')).

The display data generating unit 123 filters the search results transmitted from the Internet server 53 and the home server 64 to generate display data for displaying the content search results to the user. For example, if the number of search results to be displayed is preset by a user, the display data is generated to display the preset number of search results.

The filtered results are output to the display control unit 124 (arrow (7)) which in turn displays the filtered results on the display 82 (arrow (8)). Namely, the displayed search result screen is a start-up initial screen.

In the initial screen (content selection screen) the user can select the content to be used, from the contents searched in accordance with the key information and the additional information, by operating the remote controller.

On the displayed selection screen, when a user instructs, for example, to display a list of music contents in a state that a list of moving image contents is displayed, or to display a list of music contents of [artist B] in a state that a list of music contents of [artist A] is displayed, the control unit 121 changes the key information and the additional information and conducts again a content search in accordance with the changed key information and additional information. The search results are displayed on the display 82 and presented to the user.

A change in the key information and the additional information is decided, for example, by a motion of a cursor displayed on the selection screen.

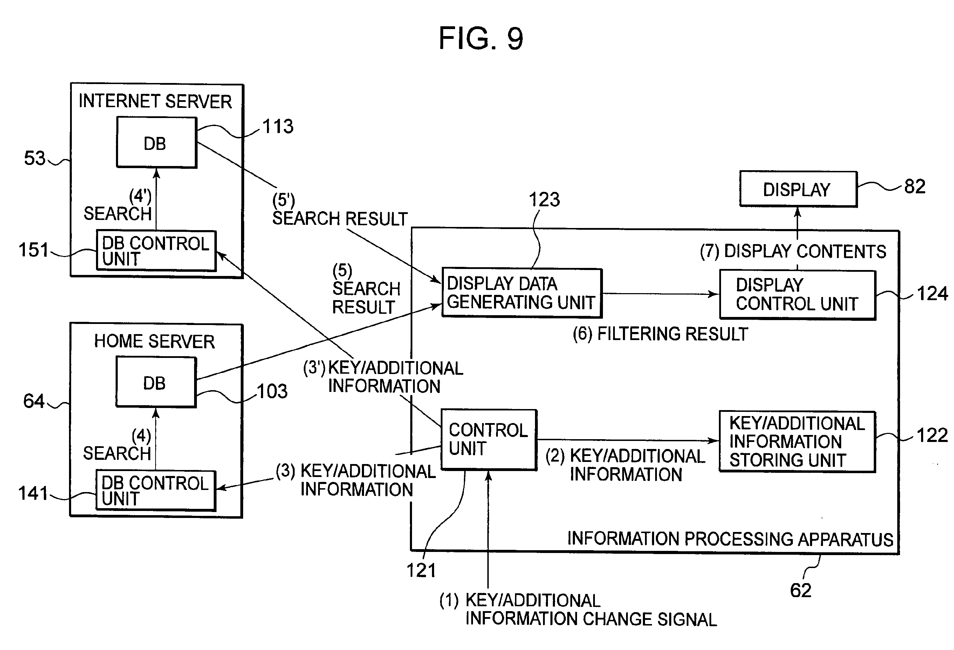

Fig. 9 is a diagram illustrating an example of an operation of the content providing system to be executed when key information and additional information is changed.

The operation to be executed when the key information and the additional information is changed is also basically similar to the operation to be executed upon start-up shown in Fig. 6. Namely, when a change in the key information and the additional information is detected (arrow (1) in Fig. 9), the control unit 121 stores the changed key information and additional information in the key/additional information storing unit 122 (arrow (2)) and transmits the information to the Internet server 53 and the home server 64 to request a search (arrows (3) and (3')). Thereafter, similar to the operation upon start-up, in accordance with the search results (arrow (5')) transmitted from the Internet server 53 and the search results (arrow (5)) transmitted from the home server 64, display data is generated and the search results are displayed (arrow (7)).

By simply moving the cursors displayed on the selection screen, a user can select the key information and the additional information and can switch the selection screen to display the content search results on the basis of the selected key information and additional information.

A user can set as desired whether a search is requested to the Internet server 53 or the home server 64. Depending upon the setting, the search is conducted within the range of contents stored in the storing unit 83. In Figs. 6 and 9, depiction of a data search in the storing unit 83 and the external storage device 63 is omitted. However, if the storing unit 83 and the external storage device 63 are set as the search objects, the content search is conducted also in the storing unit 83 and the external storage device 63 in a similar manner described above. Similar to the search results of the Internet server 53, the search results are acquired by the display data generating unit 123 and the contents of the search results are displayed.

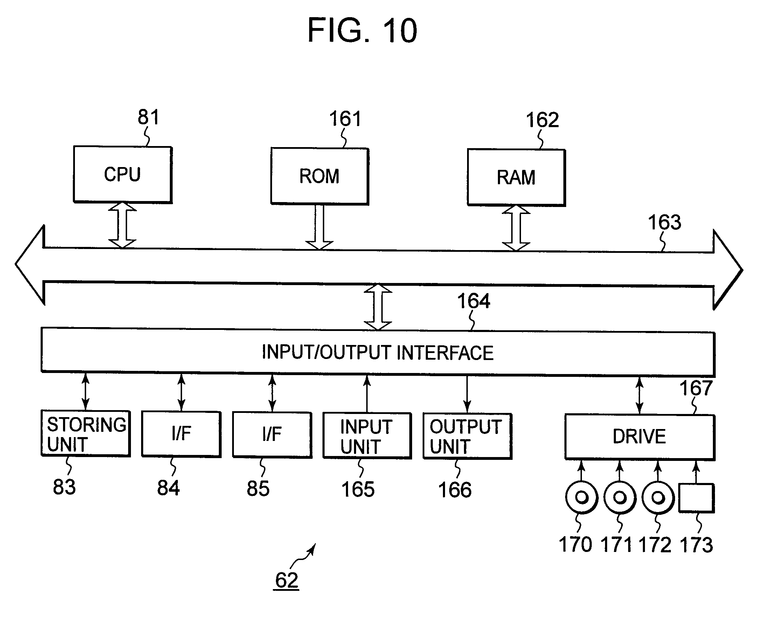

Fig. 10 is a block diagram showing an example of the structure of the information processing apparatus 62.

A CPU 81 executes various processes in accordance with a program stored in a ROM (Read Only Memory) 161 or a program loaded in a RAM (Random Access Memory) 162 from the storing unit 83. The RAM 162 stores also data necessary for the CPU 81 to execute various processes and other data when necessary.

The CPU 81, the ROM 161 and the RAM 162 are interconnected via a bus 163. The bus 163 is also connected to an input/output interface 164.

Connected to the input/output interface 164 are the storing unit 83 constituted of a hard disk or the like, an interface 84 for connection to the home network 61 and an interface 85 for connection to the external storage device 63. An input unit 165 and an output unit 166 are also connected to the input/output interface 164. The input unit 165 includes a light acceptance unit for an infrared ray emitted from the remote controller and other devices, in addition to a keyboard and a mouse. The output unit 166 includes a display 82, such as a CRT (Cathode Ray Tube) and an LCD (Liquid Crystal Display), and a speaker.

A drive 167 is connected to the input/output interface 164 when necessary. A magnetic disk 170, an optical disc 171, a magneto optical disc 172, a semiconductor memory 173 or the like is mounted in the drive when necessary. A computer program and content read from the media from the magnetic disk 170 to the semiconductor memory 173 are installed in the storing unit 83 when necessary.

The structures of the Internet server 53 and the home server 64 shown in Fig. 3 are basically similar to the structure shown in Fig. 10. Therefore, in the following, the structure shown in Fig. 10 is cited also as the structures of the Internet server 53 and the home server 64 when necessary.

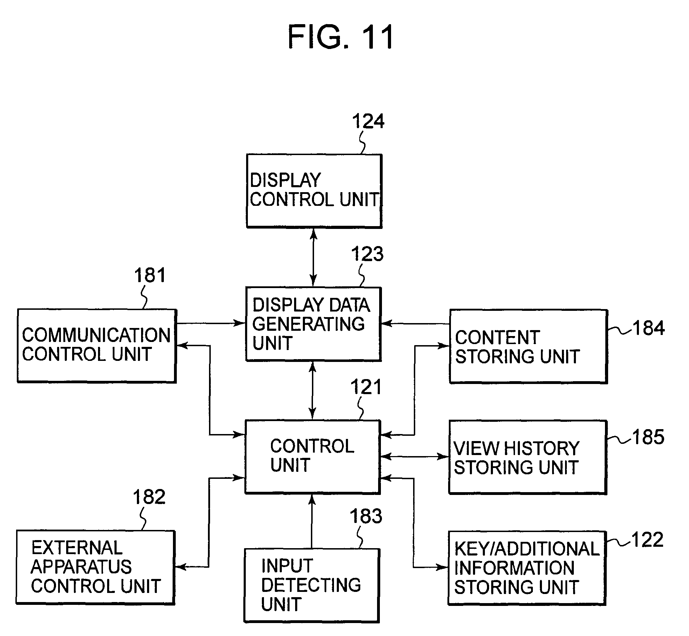

Fig. 11 is a block diagram showing an example of a functional structure of the information processing apparatus 62.

Each structure shown in Fig. 11 is realized by making the CPU 81 shown in Fig. 10 run the control program 83A in the storing unit 83. Description regarding the structure already described will be omitted when appropriate.

The control unit 121 controls the whole operation of the information processing apparatus 62. The display data generating unit 123 filters search results transmitted from the Internet server 53 and the like, generates display data and outputs the display data to the display control unit 124. The display data generating unit 123 controls to play content supplied from a communication control unit 181 and a content storing unit 184.

The communication control unit 181 controls the interface 84 to control communications with each apparatus via the home network 61. For example, the communication control unit 181 outputs content search results acquired via the Internet 52 and the home network 61 to the display data generating unit 123. Namely, for the convenience of description, in Figs. 6 and 9, although the search results from the Internet server 53 and the home server 64 are illustrated to be directly supplied to the display data generating unit 123, the search results are actually supplied via the communication control unit 181.

An external apparatus control unit 182 controls the external storage device 63 connected via the interface 85. For example, in response to a request for searching contents stored in the external storage device 63 from the control unit 121, the external apparatus control unit 182 searches the contents and outputs the search result to the control unit 121.

An input detecting unit 183 detects a user input through the keyboard, the remote controller or the like and outputs the user input to the control unit 121.

The content storing unit 184 manages the contents stored in the storing unit 83 and outputs the content which the control unit 121 instructed to read, to the display data generating unit 123.

A view history storing unit 185 stores a content view history (play history of the information processing apparatus 62) of each user and provides the content view history to the control unit 121 when necessary.

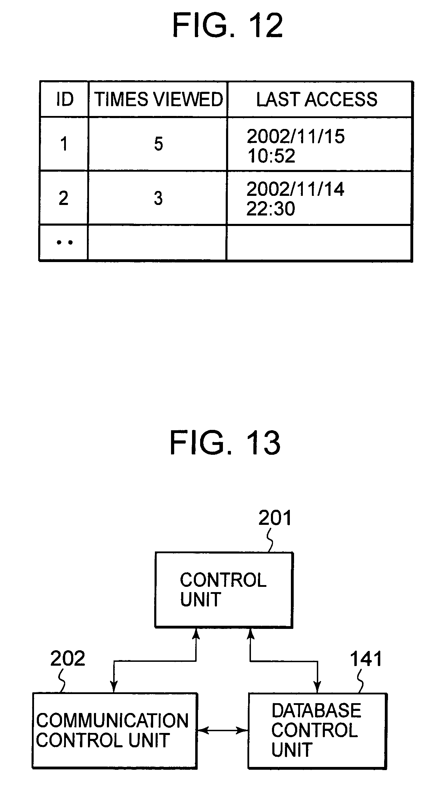

Fig. 12 is a diagram showing an example of a view history stored in the view history storing unit 185.

For example, an ID of each played content, the number of times viewed and a last access (year, month and day, time last viewed) are stored as the view history in the view history storing unit 185. In the example shown in Fig. 12, content having a content ID [1] was viewed [five times], the last view date was [2000/11/15], and its time was [10:52]. Content having a content ID [2] was viewed [three times], the last view date was [2002/10/14], and its time was [22:30].

Switching of search result display and the like are performed in accordance with the view history stored in the view history storing unit 185.

Fig. 13 is a block diagram showing an example of the functional structure of the home server 64 as the information managing apparatus. This structure is realized by making the CPU 101 of the home server 64 run the provision program 103A stored in the database 103.

A control unit 201 controls the whole operation of the home server 64, and a communication control unit 202 controls communications with the information processing apparatus 62 via the interface 102. A database control unit 141 searches the contents stored in the database 103 in accordance with the key information and the additional information notified from the information processing apparatus 62, to extract a search result. The search result extracted by the database control unit 141 is output to the communication control unit 202 which in turn transmits it to the information processing apparatus 62. The internet server 53 has also the structure similar to that shown in Fig. 13.

Next, description will be made on the operation of the content providing system shown in Fig. 3.

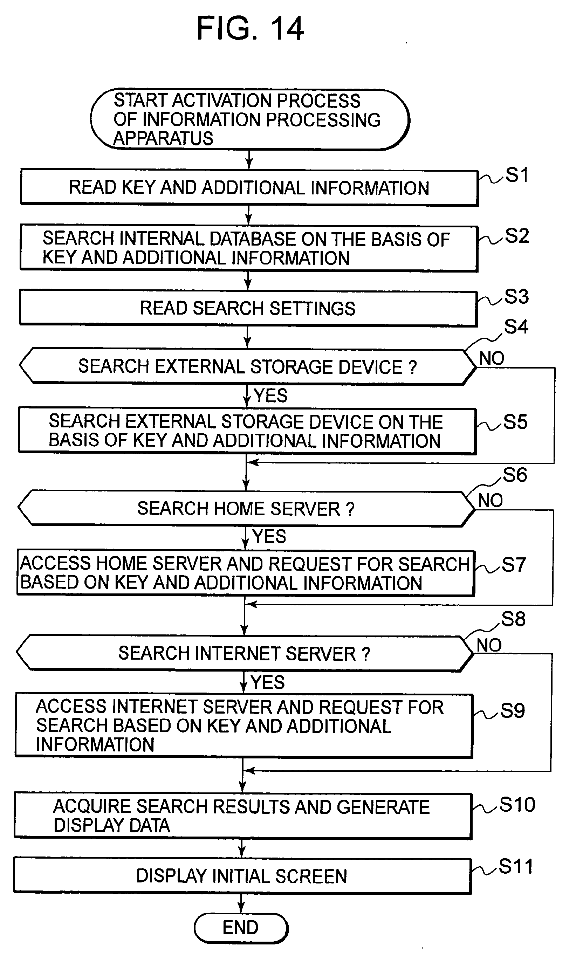

With reference to a flowchart shown in Fig. 14, description will be made first on a start-up process of the information processing apparatus 62. This process is basically similar to the process shown in Fig. 6.

When a power-on event is detected by the input detecting unit 183, at Step S1 the control unit 121 reads key information and additional information presently stored in the key/additional information storing unit 122. Namely, the control unit 122 requests the key/additional information storing unit 122 to notify the key information and the additional information.

At Step S2 the control unit 121 controls the content storing unit 184 to search contents stored in the internal database (storing unit 83) in accordance with the key information and the additional information read from the key/additional information storing unit 122. As described earlier, the content search is performed within the range designated by the additional information, and content having the same metadata as that of the key information is extracted as a search result. The search result of the contents in the content storing unit 184 is output to the display data storing unit 123.

At Step S3 the control unit 121 reads user settings for search stored, for example, in the storing unit 83. User settings indicate whether contents stored in the external storage device 63 are searched, whether contents stored in the database 113 of the Internet server 53 are searched, and whether contents stored in the database 103 of the home server 64 are searched.

User settings also include address information of the information managing apparatus to be searched, information on a password and the like used in an authentication process to be executed relative to the information managing apparatus as a pre-process for search, and other information.

In accordance with the user settings read at Step S3, the control unit 121 judges at Step S4 whether the external storage device 63 is to be searched. If it is judged at Step S4 that the external storage device 63 is to be searched, at Step S5 the control unit 121 searches the external storage device 63 in accordance with the key information and the additional information read at Step S1. Namely, the external apparatus control unit 182 is notified the key information and the additional information from the control unit 121 and instructed to search the contents stored in the external storage device 63.

The search result (information on content, such as the title name and creation date of each content extracted by the search) is output to the display data generating unit 123 via the control unit 121.

Next, at Step S6 the control unit 121 judges from the settings read at Step S3 whether the home server 64 is to be searched. In a case where it is judged at Step S6 that the home server 64 is to be searched, the flow advances to Step S7. In response to an instruction from the control unit 121, at Step S7 the communication control unit 181 accesses the home server 64 via the home network 61 and requests the home server 64 to search contents in accordance with the key information and the additional information.

The search result of the home server 64 is acquired by the communication control unit 181 via the home network 61 and output to the display data generating unit 123.

Next, at Step S8 the control unit 121 judges from the settings read at Step S3 whether the Internet server 53 is to be searched. In a case where it is judged at Step S8 that the Internet server 53 is to be searched, the flow advances to Step S9. In response to an instruction from the control unit 121, at Step S9 the communication control unit 181 accesses the Internet server 53 via the home network 61, the router apparatus 65 and the Internet 52 and requests the Internet server 53 to search contents in accordance with the key information and the additional information.

The search result of the Internet server 53 is acquired by the communication control unit 181 via the Internet 52, the router apparatus 65 and the home network 61 and output to the display data generating unit 123.

In a case where it is judged at Step S4 that the external storage device 63 is not to be searched, the process at Step S5 is skipped, and in a case where it is judged at Step S6 that the home server 64 is not to be searched, the process at Step S7 is skipped. In a case where it is judged at Step S8 that the Internet server 53 is not to be searched, the process at Step S9 is skipped.

In a case where another information managing apparatus to be searched is further set, a search request for the apparatus is also performed. For example, in a case where a user sets a plurality of information managing apparatuses connected to the Internet 52 as the search targets, a search request for each apparatus is performed and the search results are acquired.

At Step S10 the display data generating unit 123 acquires the search result acquired from the Internet server 53 and the home server 64 and supplied via the communication control unit 181, the search result acquired from the external storage device 63 by the external apparatus control unit 182 and supplied via the control unit 121, and the search result acquired and supplied from the storing unit 83 by the content storing unit 184. Also at Step S10 the display data generating unit 123 generates display data from the acquired search results.

As described above, in a case where a user presets information such as the number of search results to be displayed in a list, the display data is generated in accordance with the settings. The display data generated by the display data generating unit 123 is output to the display control unit 124.

In the search, for example, the information processing apparatus 62 may notify the requested number of search results to the home server 64, and only the search results in the number corresponding thereto are notified to the information processing apparatus 62.

At Step S11 the display control unit 124 displays the search result on the display 82 in accordance with the display data supplied from the display data generating unit 123 to thereafter terminate the start-up process. The displayed screen is to be the initial screen (selection screen) at the start-up of the information processing apparatus 62.

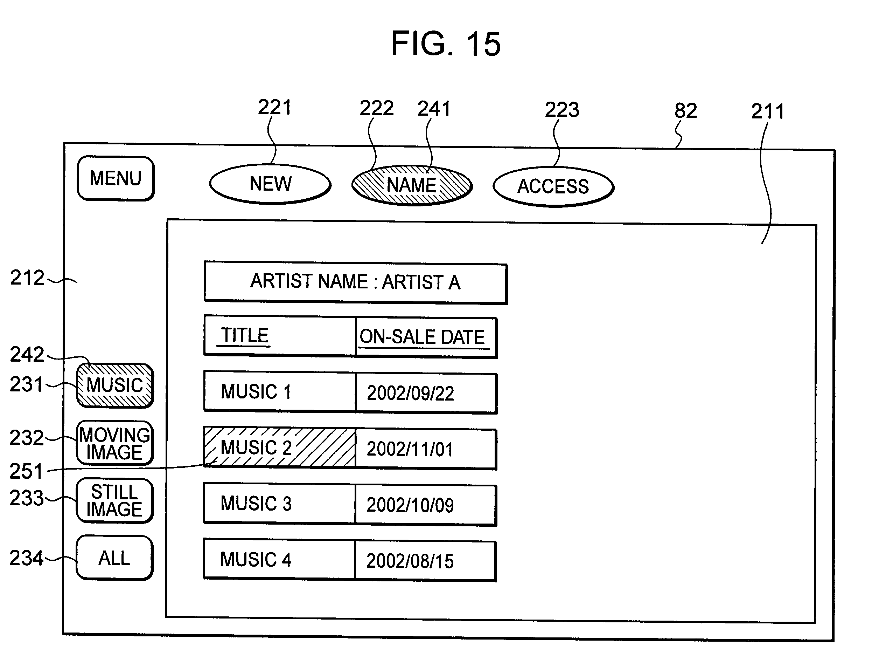

Fig. 15 is a diagram showing an example of the selection screen displayed at Step S11.

In the content selection/display area 211 shown in Fig. 15, a list of music contents of [artist A] (music contents containing artist A in the metadata) is displayed, and the title (music name) and on-sale date of each content are displayed. In the example shown in Fig. 15, the on-sale date of [music 1] is [2002/09/22] and the on-sale date of [music 2] is [2002/11/01]. The on-sale date of [music 3] is [2002/10/09] and the on-sale date of [music 4] is [2002/08/15].

The title and on-sale date of the music content are acquired from the Internet server 53, the external storage device 63, the home server 64 and the storing unit 83, as the search results based on the key information and the additional information.

In Fig. 15, the [music 2] is selected with a cursor 251. A user can select content to be played by moving the cursor 251 with the remote controller or the like.

In the upper area (menu display area 212A) of the display 82, a NEW button 221, a NAME button 222 and an ACCESS button 223 are displayed. The NEW button is operated to display the contents displayed in the content selection/display area 211 in the order of on-sale date from the later to the earlier, the NAME button is operated to display the contents in the order of name, and the ACCESS button is operated to display the contents in the order of access occurrence from the higher to the lower. In Fig. 15, of these three buttons, the NAME button 222 is selected with the cursor 241. A user can switch the screen in the content selection/display area 211 by moving the cursor 241 with the remote controller or the like.

Displayed in the left area of the display 82 are a music button 231 operated to display a music content list (search result) in the content selection/display area 211, a moving image button 232 operated to display a moving image content list in the content selection/display area 211, a still image button 233 operated to display a still image content list in the content selection/display area 211 and an ALL button 234 operated to display a list of all contents in the content selection/display area 211, independent from the content type.

In the example shown in Fig. 15, the music button 231 is selected with the cursor 242. A user can switch the category of content to be displayed in the content selection/display area 211 by moving the cursor 242 with the remote controller or the like.

In the screen of the display 82 in Fig. 15 and subsequent drawings, an active cursor (cursor operable by the remote controller) is indicated by oblique lines.

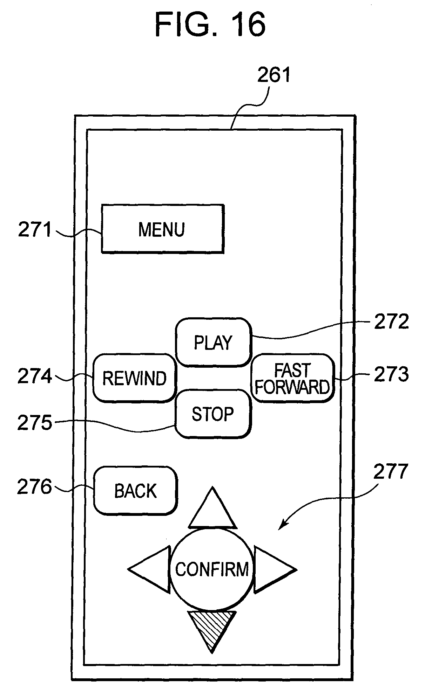

Description will be made on the screen of the display 82 in a case where an operation through the remote controller 261 is carried out. A button of the remote controller 261 operated by a user is shaded in Fig. 16 and subsequent drawings.

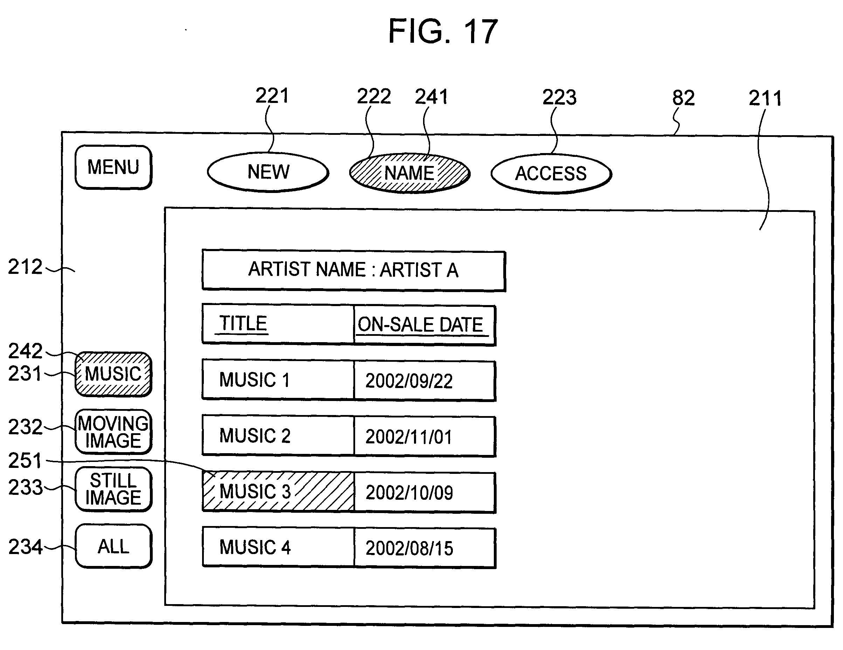

For example, as shown in Fig. 15, in the state that the [music 2] in the content selection/display area 211 is selected with the cursor 251, if a lower button of the cross confirmation button 277 shown in Fig. 16 is depressed once, the cursor 251 moves downward as shown in Fig. 17 to enter a state that the [music 3] is selected in the screen of the display 82.

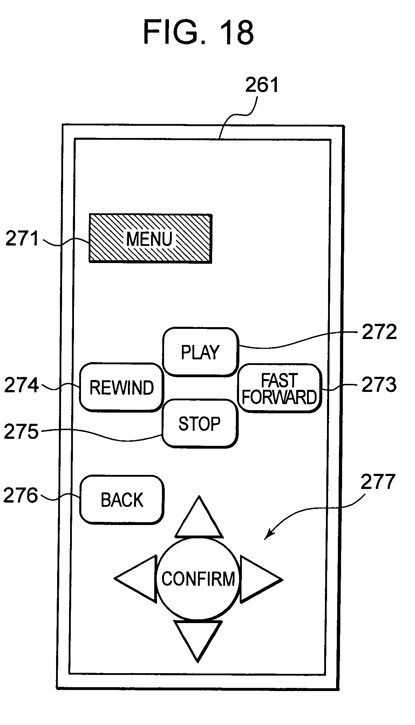

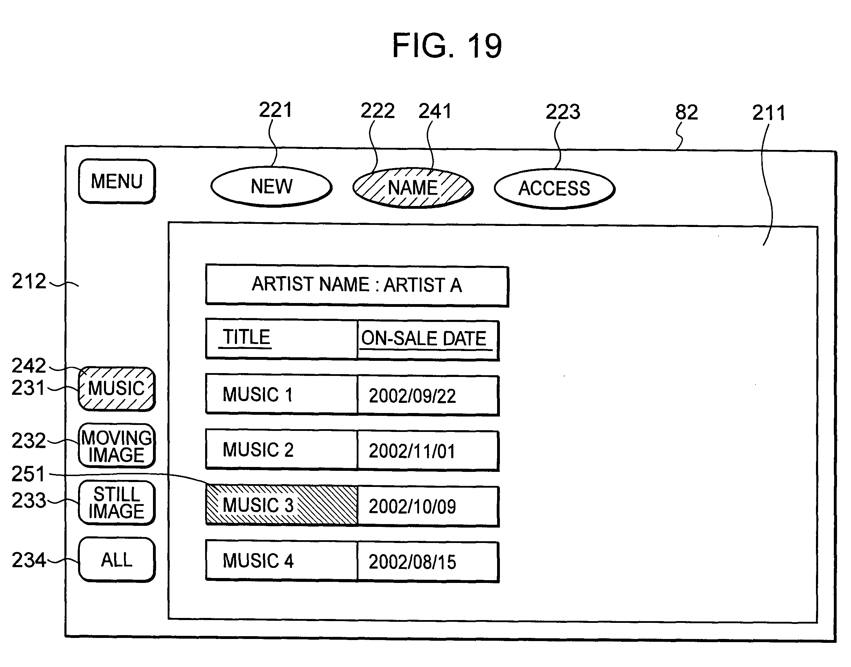

In the state of the screen shown in Fig. 17, when the menu button 271 of the remote controller 261 is depressed once as shown in Fig. 18, the screen of the display 82 becomes as shown in Fig. 19. Namely, the cursors 241 and 242 become active cursors so that together with an operation of the cross confirmation button 177, the cursor 241 can be moved right and left and the cursor 242 can be moved up and down, respectively, in the screen of the display 82.

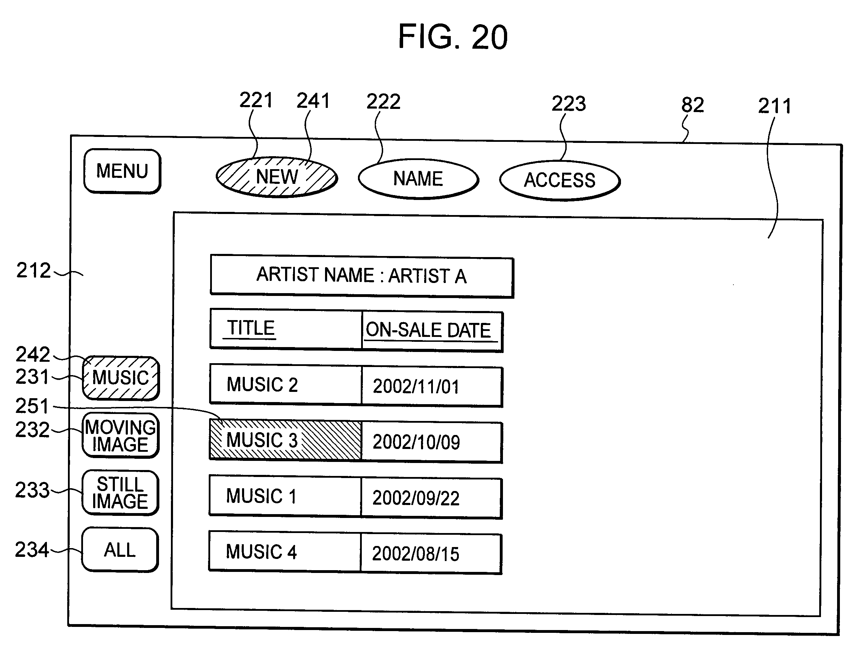

As shown in Fig. 19, in the state that the NAME button 222 is selected with the active cursor 241, if the left button of the cross confirmation button 277 is depressed once and then the confirmation button is depressed, the screen of the display 82 becomes as shown in Fig. 20. Namely, in response to depression of the NEW button 221, the display order of contents is changed to be sorted in the order of [music 2], [music 3], [music 1] and [music 4] from the top and displayed in the order from the later on-sale date (near to date). The position of the cursor 251 also moves as the music content of [music 3] is displayed.

As shown in Fig. 20, in the state that the [music 3] is selected with the cursor 251, if the play button 272 of the remote controller 261 is depressed, a play command is transmitted to the information processing apparatus 62 to start playing the [music 3].

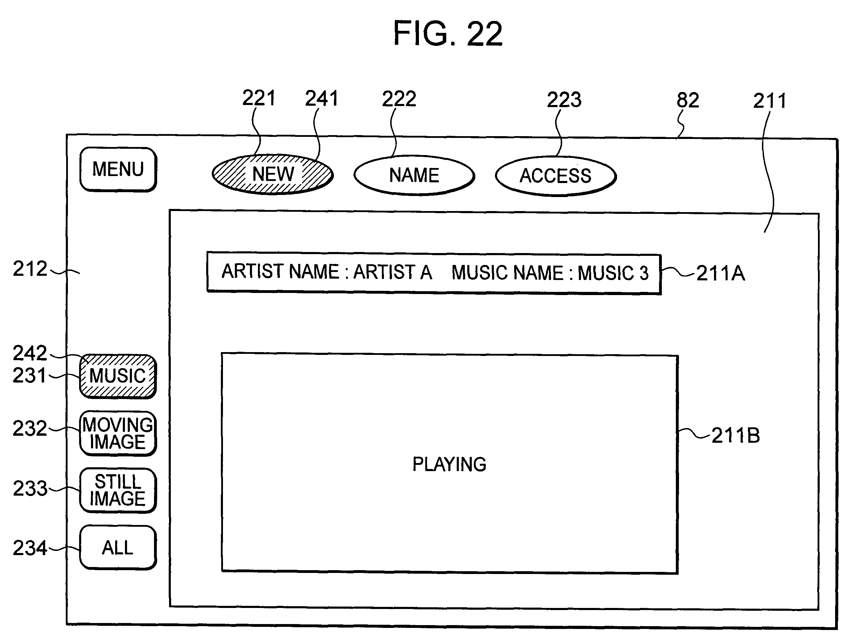

Fig. 22 is a diagram showing an example of the screen of the display 82 when playing of the [music 3] is instructed in the state that the screen of Fig. 20 is displayed.

In Fig. 22, a window 211A is displayed in the content selection/display area 211, and an artist name [artist A] and a music name [music 3] of the music content being played are displayed in this window. A window 211B is displayed under the window 211A and characters [PLAYING] are displayed in this window. The [music 3] is output from an unillustrated speaker of the information processing apparatus 62. In a case where the content to be played is moving image content, the content thereof is displayed in the window 211B.

As described above, in cooperation with the operation of the remote controller 261, the cursor is moved to switch the selection target. As the selection target is switched with the cursor, the above-described key information and additional information is changed.

More specifically, the title and artist name (artist A) of each of the music contents shown in Fig. 15 are metadata of the music content, and the title or artist name selected with the cursor 251 is set as the key information. Similarly, the buttons from the music button 231 to the ALL button 234 displayed to the left of the display are used for the additional information for designating the content search range, and the category selected with the cursor 242 is set as the additional information. Namely, a plurality of key information (metadata) and additional information are disposed on the content selection screen.

As the key information and the additional information are changed, the display in the content selection/display area 211 is switched.

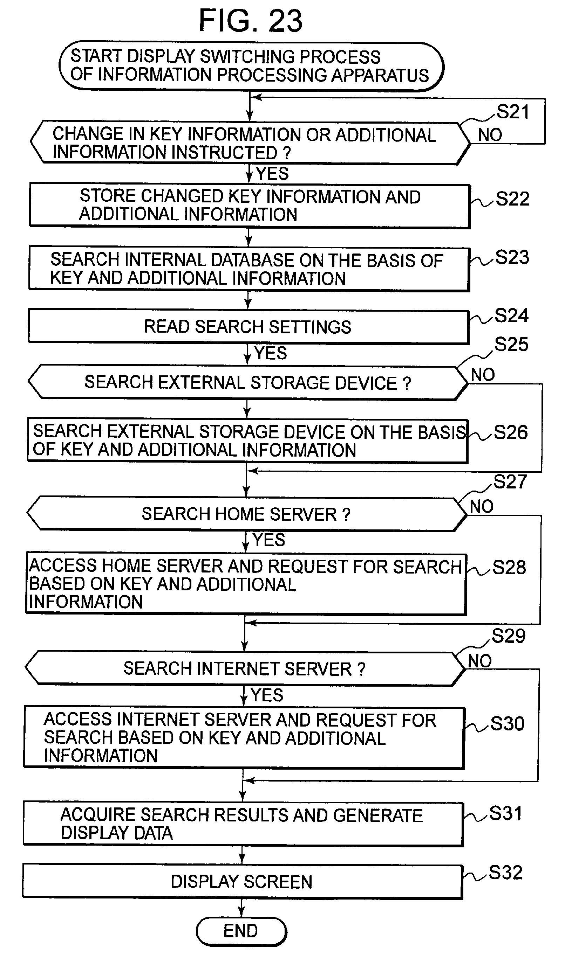

Next, with reference to a flowchart shown in Fig. 23, description will be made on a display switching process of the information processing apparatus 62 to be executed when the key information and the additional information is changed. This process is basically similar to the process shown in Fig. 9.

At Step S21 the control unit judges from an output from the input detecting unit 183 whether a change in the key information or the additional information is instructed in the screen of the display 82, and waits until it is judged that a change is instructed.

For example, as shown in Fig. 20, it is judged that a change in the key information or the additional information is instructed, when the moving image button 232 is selected to instruct playing moving image content, in a state that the music content of the [artist A] is displayed in the content selection/display area 211, or when the music content of the [artist B] is instructed to be displayed by a predetermined operation, in the state that the content of the [artist A] is displayed. It may be judged that it is instructed to change the key information or the additional information when a user inputs such information through the keyboard or the like.

In a case where it is judged at Step S21 that a change in the key information or the additional information is instructed, the flow advances to Step S22 whereat the control unit 121 makes the changed key information and additional information be stored in the key/additional information storing unit 122. For example, as shown in Fig. 20, in the state that the [music 3] of the [artist A] is selected with the cursor 251, in a case where the moving image button 232 is depressed to instruct displaying the moving image content, the [artist A, music 3] as the key information and the [moving image content] as the additional information are newly stored in the key/additional information storing unit 122.

Also, in the state that the content of the [artist A] is displayed, when it is instructed to display the music content of the [artist B], the key information [artist B] and the additional information [music content] is stored in the key/additional information storing unit 122.

As above, in cooperation with the movement of the cursor, the key information used as the search criterion and the additional information for designating the search range are changed.

The processes from Step S23 to Step S32 are similar to the processes from Step S2 to Step S11 shown in Fig. 14. Namely, in accordance with the new key information and additional information changed at Step S22, the internal database is searched (Step S23), and thereafter, in accordance with user settings, a search is performed on the basis of the new key information and additional information at the external storage device 63, the home server 64 and the Internet server 53 where necessary (Steps S26, S28, S30).

At Step S31 the search results are acquired by the display data generating unit 123. In accordance with the display data generated by the display data generating unit 123, the search results (content selection screen) based on the new key information and additional information changed in accordance with, for example, a movement of the cursor are displayed in the content selection/display area 211 of the display 82.

More specific description will be made on the process described with reference to the flowchart shown in Fig. 23.

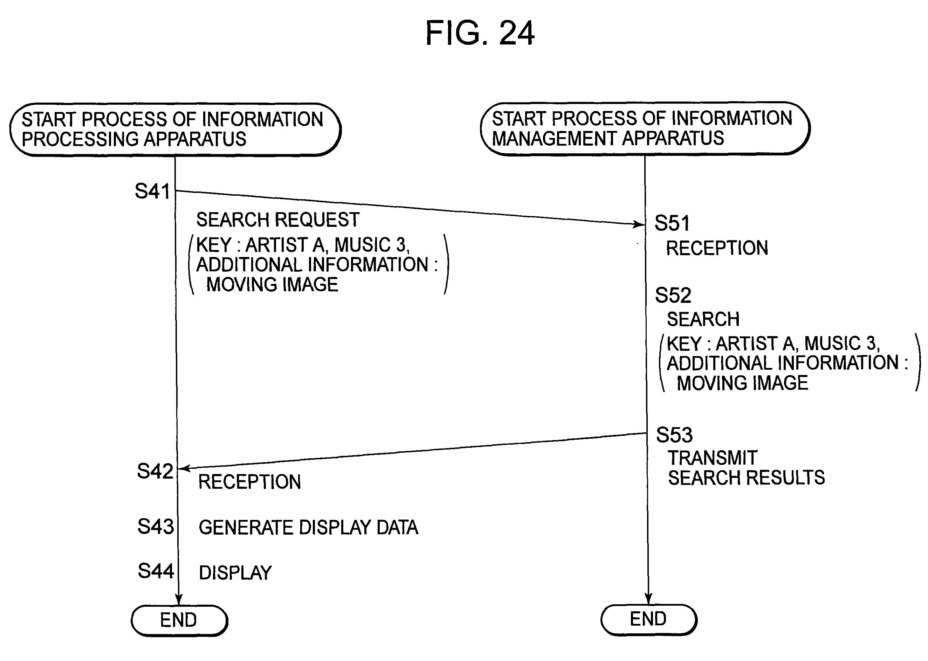

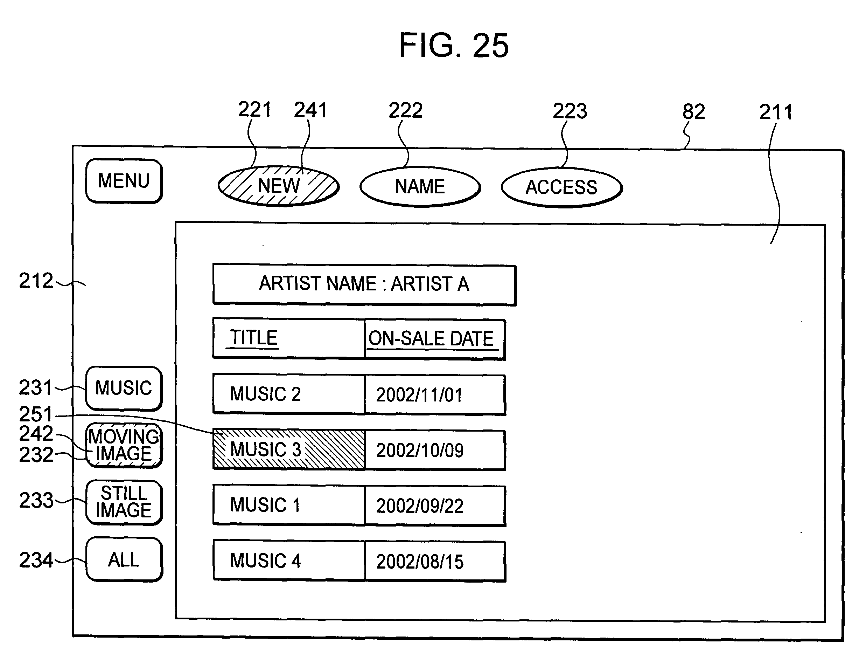

First, with reference to a flowchart of Fig. 24, description will be made on the process to be executed between the information processing apparatus 62 and the information managing apparatus (Internet server 53, home server 64) in a case where it is instructed to display moving image content in the state that the music content [music 3] of the [artist A] in the content selection/display area 211 is selected with the cursor 251, as shown in Fig. 25. Fig. 25 is a diagram showing an example of the screen of the display 82 when the cursor 242 is made active from the state shown in Fig. 20 and the moving image button 232 is selected.

When it is instructed to display the moving image content, at Step S41 the control unit 121 transmits a search request including the key information [artist A, music 3] and the additional information [moving image content] to the information managing apparatus to request for searching for moving image content whose metadata contains [artist A, music 3]. At this time, a search for moving image content whose metadata contains [artist A, music 3] is performed also at the external storage device 63 and the internal database in the similar manner.

At Step S51 the communication control unit 202 (Fig. 13) of the information managing apparatus receives the search request transmitted from the information processing apparatus 62, and outputs it to the database control unit 141. At Step S52 the database control unit 141 searches contents stored in the database 113 in accordance with the key information and the additional information notified from the information processing apparatus 62, to extract the moving image content whose metadata contains [artist A, music 3]. Information on the title, on-sale date and the like of the moving image content is acquired by the database control unit 141 and output to the communication control unit 202 as the search result.

At Step S53 the communication control unit 202 transmits the information representative of the search result to the information processing apparatus 62.

At Step S42 the communication control unit 181 of the information processing apparatus 62 receives the search result transmitted from the information managing apparatus and outputs it to the display data generating unit 123. At Step S43 the display data generating unit 123 generates the display data from the search result supplied from the information managing apparatus to thereafter advance to Step S44 whereat the selection screen is displayed on the display 82 in accordance with the generated display data.

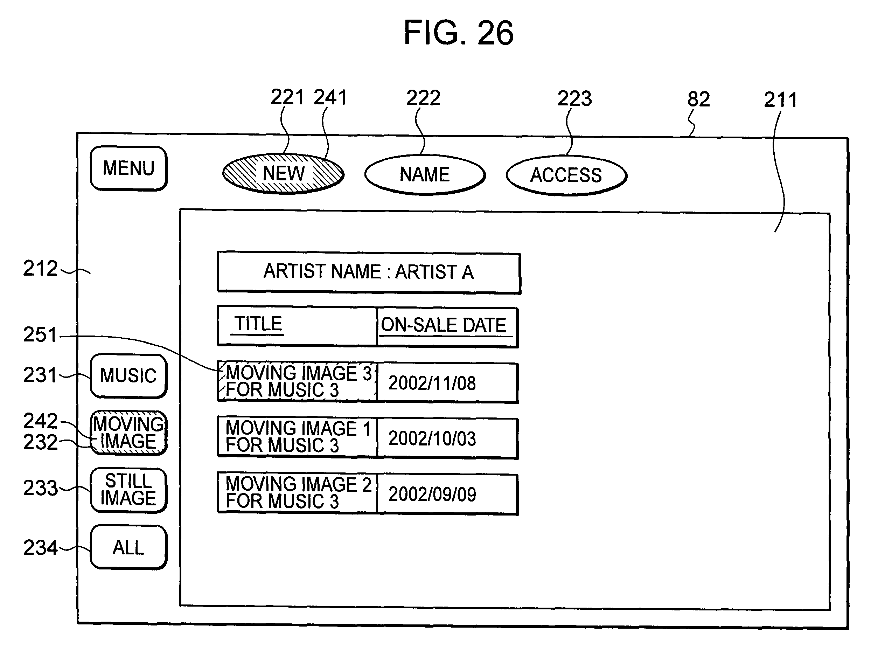

Fig. 26 is a diagram showing an example of the screen of the display 82 at Step S44.

In Fig. 26, moving image contents [moving image 3 for music 3], [moving image 1 for music 3] and [moving image 2 for music 3] are displayed in a list as the search results. These contents [moving image 3 for music 3], [moving image 1 for music 3] and [moving image 2 for music 3] are moving image contents such as promotion video for the [music 3] by the artist A, the metadata thereof containing [artist A] as the name of an artist playing in the moving image content and [music 3] as the title of the content.

A user selects predetermined moving image content from the moving image contents displayed in the content selection/display area 211 shown in Fig. 26, and depresses the play button 272 of the remote controller 261 so that the moving image content can be played.

As described above, only by changing the category, a user can display other content related to the contents displayed in the content selection/display area 211 up to that time. For example, in the state that the screen shown in Fig. 20 is displayed, if a user desires to view moving image content such as promotion video of [music 3], the user simply changes the category in the content selection/display area 211 to display the moving image content related to the [music 3].

Namely, a user can select favorite content efficiently and quickly.

In a case where there is not provided the above-described function of automatically changing the key information and the additional information only by changing the category to search the contents in accordance with the changed key information and additional information, in order to view the promotion video of the [music 3] from the state shown in Fig. 20, a user is required to display a list of moving image contents (a list of moving image contents of an artist) in the content selection/display area 211, to display from the list a list of moving image contents of the artist A, and further, to select from this list the content to be played.

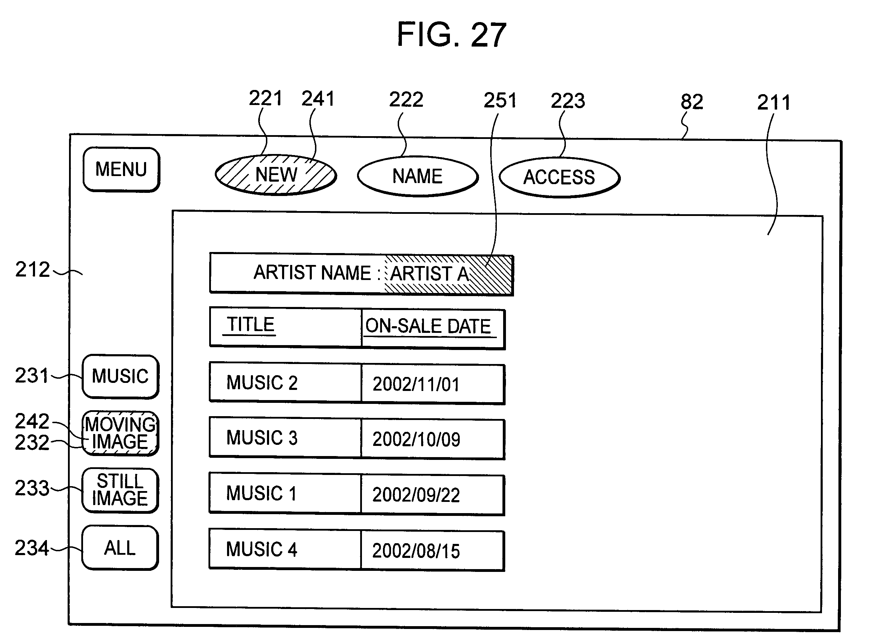

Fig. 27 is a diagram showing another example of the screen of the display 82.

In the screen shown in Fig. 27, [artist A] is selected with the cursor 251 and displaying of moving image content is selected by the cursor 242.

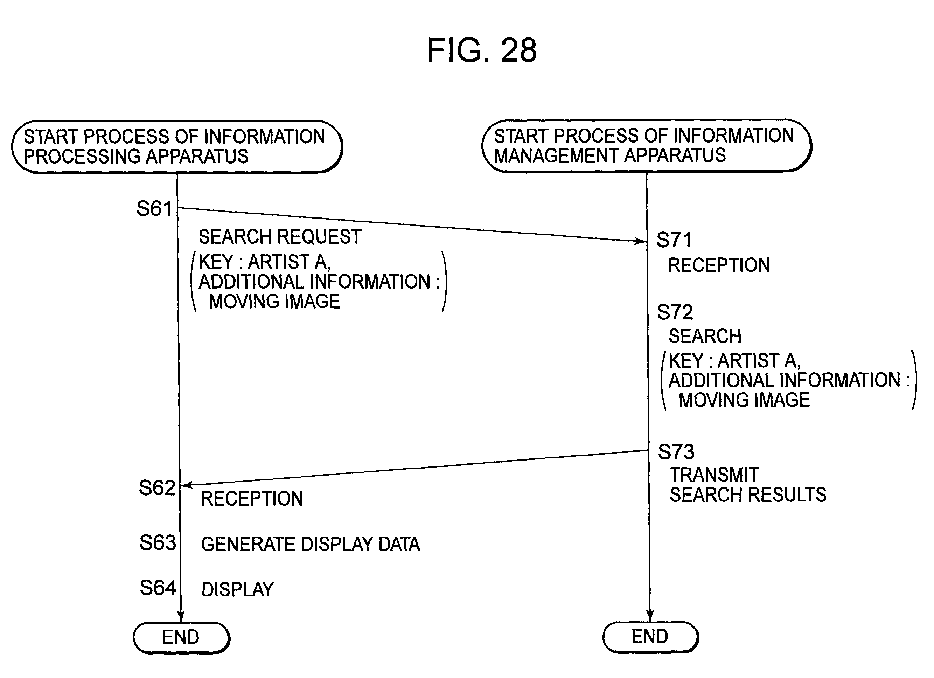

Next, with reference to a flowchart of Fig. 28, description will be made on the process to be executed between the information processing apparatus 62 and the information managing apparatus when it is instructed to display moving image content in the content selection/display area 211 in the state that [artist A] is selected with the cursor 251, as shown in Fig. 27. The process shown in Fig. 28 is basically similar to the process shown in Fig. 24, excepting that key information and additional information used for a search is different.

Namely, if it is instructed to display moving image content in the state that the [artist A] is selected with the cursor 251, at Step S61 the [artist A] selected with the cursor 251 is set as the key information and the [moving image] selected with the cursor 242 is set as the additional information. A search request including the set key information and additional information is transmitted to the information managing apparatus to request for searching for moving image content whose metadata contains the [artist A]. A search for the moving image content whose metadata contains the [artist A] is also performed at the external storage device 63 and the internal database.

At Step S71 the information managing apparatus receives the search request from the information processing apparatus 62, and at Step S72 moving image contents are searched on the basis of the key information and the additional information notified from the information processing apparatus 62. Therefore, the moving image content whose metadata contains [artist A] is extracted. At Step S73 the search result containing the information on the extracted moving image content is transmitted to the information processing apparatus 62.

At Step S62 the search result transmitted from the information managing apparatus is received, and at Step S63 display data is generated from the search result. In accordance with the generated display data, at Step S64 a list of search results is displayed on the display 82.

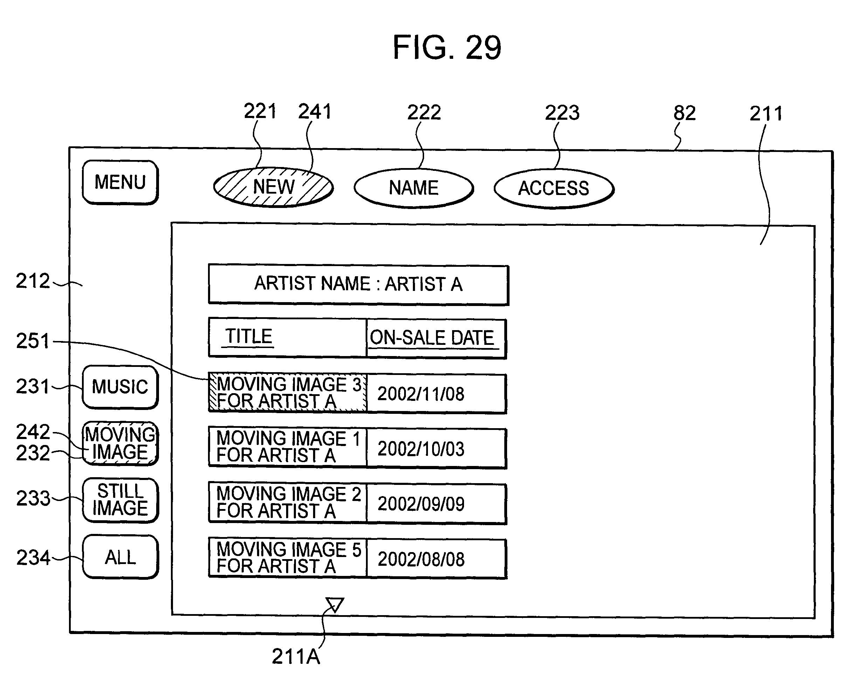

Fig. 29 is a diagram showing an example of the screen of the display 82 at Step S64.

In Fig. 29, moving image contents [moving image 3 for artist A], [moving image 1 for artist A] and [moving image 2 for artist A] are displayed in a list as the search results. The contents extracted as the search results can be displayed more by using a scroll button 211A.

The [moving image 3 for artist A], [moving image 1 for artist A] and [moving image 2 for artist A] are moving image contents such as promotion video for music programs by the artist A (all music programs including the music 3 shown in Fig. 27), the metadata thereof containing [artist A] as the name of an artist playing in the moving image content. A user selects predetermined content from the moving image contents shown in Fig. 29 so that the moving image content can be played.

As described above, a user can efficiently and quickly display a list of moving image contents related to the artist A in the state (shown in Fig. 27) that the music contents of the artist A are displayed.

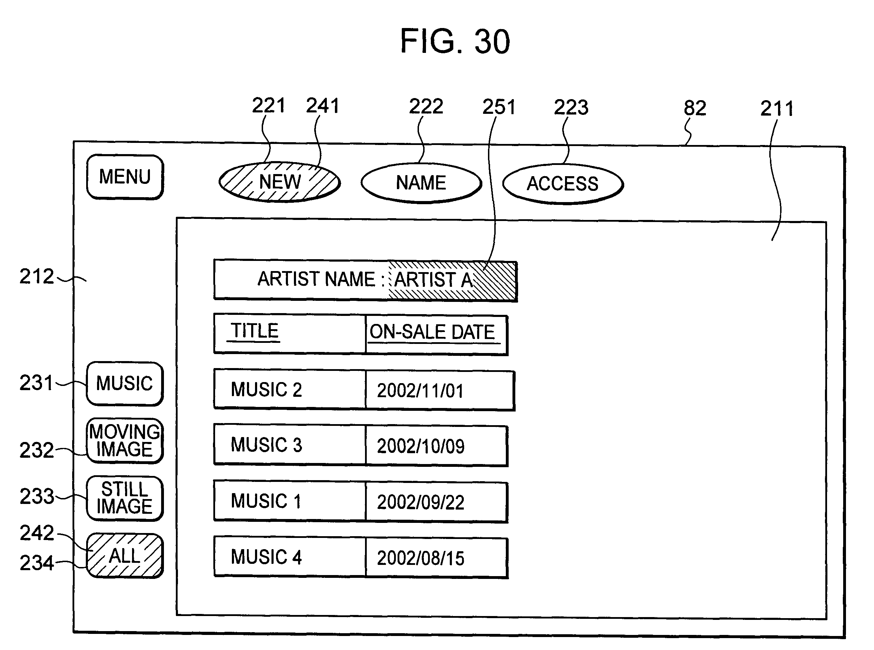

Fig. 30 is a diagram showing another example of the screen of the display 82.

In the screen shown in Fig. 30, [artist A] is selected with the cursor 251 and the ALL button 234 is selected with the cursor 242.

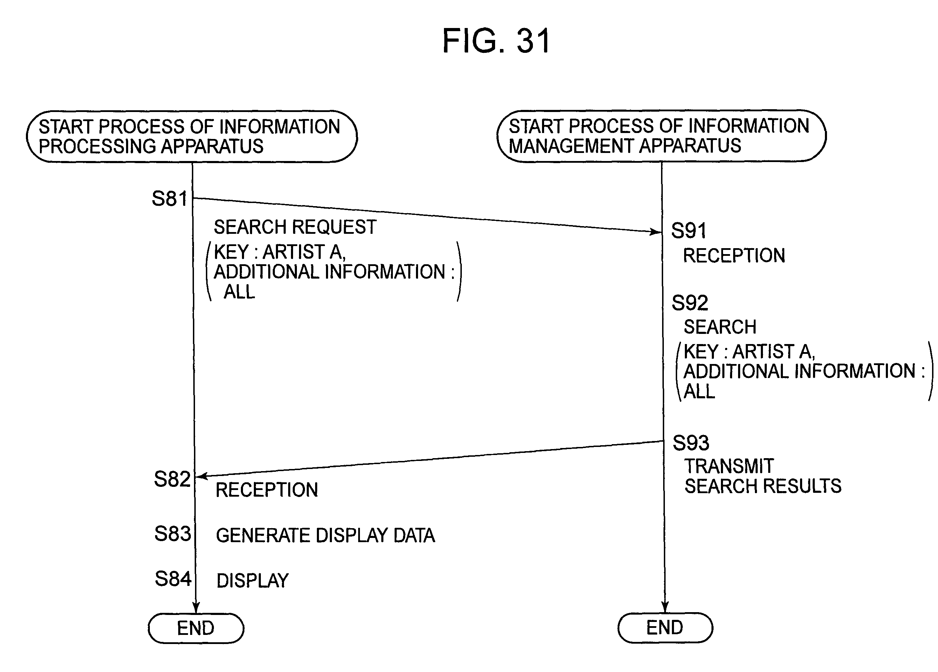

Next, with reference to a flowchart of Fig. 30, description will be made on the process to be executed between the information processing apparatus 62 and the information managing apparatus when it is instructed (when the ALL button 234 is depressed) to display all contents related to [artist A] in the content selection/display area 211 in the state that the [artist A] is selected with the cursor 251, as shown in Fig. 30. The process shown in Fig. 31 is basically similar to the process shown in Fig. 28, excepting that key information and additional information used for a search is different.

Namely, when it is instructed to display all contents related to the [artist A] in the state that the [artist A] is selected with the cursor 251, at Step S81 a search request including the metadata [artist A] as the key information and [ALL] selected as the additional information is transmitted to the information managing apparatus to request for searching contents. A search for the content whose metadata contains the [artist A] is also performed at the external storage device 63 and the internal database, or when necessary at the home server 64 and the Internet server 53.

At Step S91 the request from the information processing apparatus 62 is received at the information managing apparatus, and at Step S92 a content search is performed in accordance with the key information and the additional information notified from the information processing apparatus 62. All contents whose metadata contains [artist A] are therefore extracted. At Step S93 the search result containing information on the extracted contents is transmitted to the information processing apparatus 62.

At Step S82 the search result transmitted from the information managing apparatus is received, and at Step S83 display data is generated in accordance with the search result. At Step S84 a list of the search results is displayed on the display 82 in accordance with the generated display data.

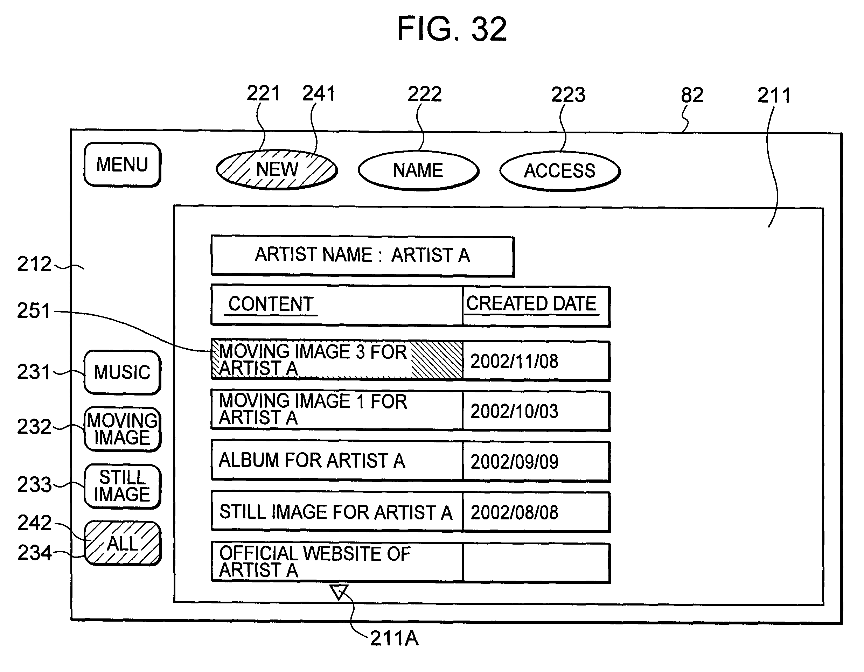

Fig. 32 is a diagram showing an example of the screen displayed at Step S84.

In the content selection/display area 211 of the screen shown in Fig. 32, moving image contents [moving image 3 for artist A] and [moving image 1 for artist A], music content [album for artist A], still image content [still image for artist A] and Web content [official home page for artist A] are displayed in a list as the search results. The contents extracted as the search results can be displayed more by using the scroll button 211A.

The [moving image 3 for artist A] [moving image 1 for artist A], [album for artist A], [still image for artist A] and [official home page for artist A] are all the contents related to the artist A. Metadata of these contents contains [artist A] as the artist name. A user can view predetermined content among the contents shown in Fig. 32.

As described above, a user can display efficiently and quickly a list of contents related to the artist A in the state (state shown in Fig. 30) that the music contents related to the artist A are displayed.

In the above description, basically the search results extracted in accordance with the key information and the additional information are displayed in the content selection screen. Similarly, in accordance with a search based on the key information and the additional information, only content not yet purchased by a user of the information processing apparatus 62 may be displayed in a list on a content purchase screen (site).

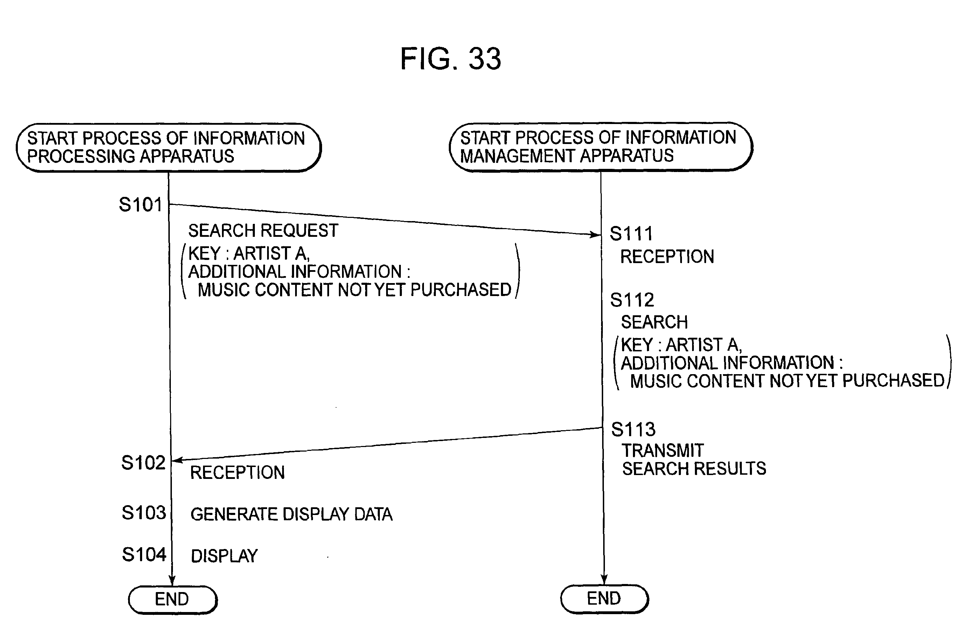

Next, with reference to a flowchart of Fig. 33, description will be made on a process to be executed between the information processing apparatus and the information managing apparatus (a managing server at a purchase site (e.g., the Internet server 53 shown in Fig. 3)) when a content purchase site screen is displayed. The process shown in Fig. 33 is basically similar to the process shown in Fig. 28 and other drawings, excepting that key information and additional information used for a search is different.

For example, when a user selects [artist A] in an artist selection screen at a purchase site and it is instructed to display a purchase screen of contents of the [artist A] or it is instructed to display a purchase screen of contents of the [artist A] from a list displayed in the search results obtained by using the [artist A] as the key information, then at Step S101 the control unit 121 transmits a search request containing the key information [artist A] and the additional information [music content not yet purchased] to the information managing apparatus.

Information on the contents already purchased by a user is registered in advance in the information managing apparatus, in correspondence with identification information of the user of the information processing apparatus 62, and the search request transmitted from the information processing apparatus 62 contains identification information input by the user.

At Step S111 the request from the information processing apparatus 62 is received by the information managing apparatus, and at Step S112 music content of the artist A not yet purchased by the user is searched in accordance with the key information and the additional information notified from the information processing apparatus 62. At this time, the information on the music content already purchased is also referred to, this information being acquired in accordance with the identification information notified from the information processing apparatus 62.

At Step S113 information on the music content of the artist A not yet purchased by the user of the information processing apparatus 62, among available music contents, is extracted and transmitted as the search result to the information processing apparatus 62.

At Step S102 the search result transmitted from the information managing apparatus is received, and at Step S103 display data is generated in accordance with the search result. At Step S104 a list of contents not yet purchased is displayed on the display 82 in accordance with the generated display data.

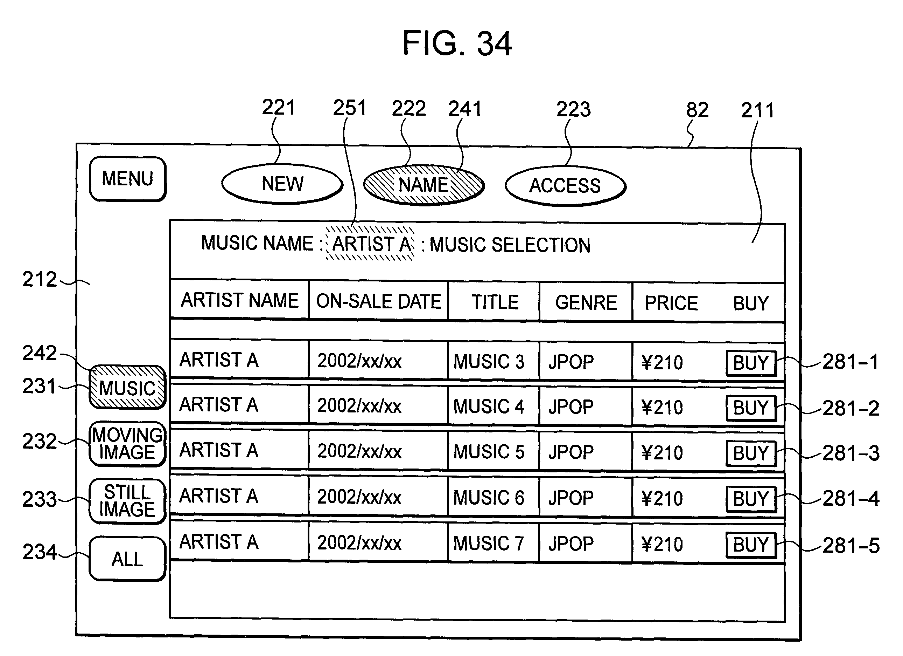

Fig. 34 is a diagram showing a display example of a music content purchase screen.

As shown in Fig. 34, contents [music 3], [music 4], [music 5], [music 6] and [music 7] of the [artist A] not yet purchased are displayed in a list in the content selection/display area 211 as the search results on the basis of the key information [artist A] and the additional information [music content not yet purchased]. In the example shown in Fig. 34, an artist name, an on-sale date, a title, a genre and a price are displayed for each content.

A user can buy (download) displayed music content by depressing a button among a buy button 281-1 to a buy button 281-5 displayed at the right end of each content not yet purchased.

Since the list of contents not yet purchased is displayed, a user can efficiently and quickly select content to purchase, without confirming whether displayed content is already purchased or not yet purchased. The user is also prevented from buying again an already purchased content.

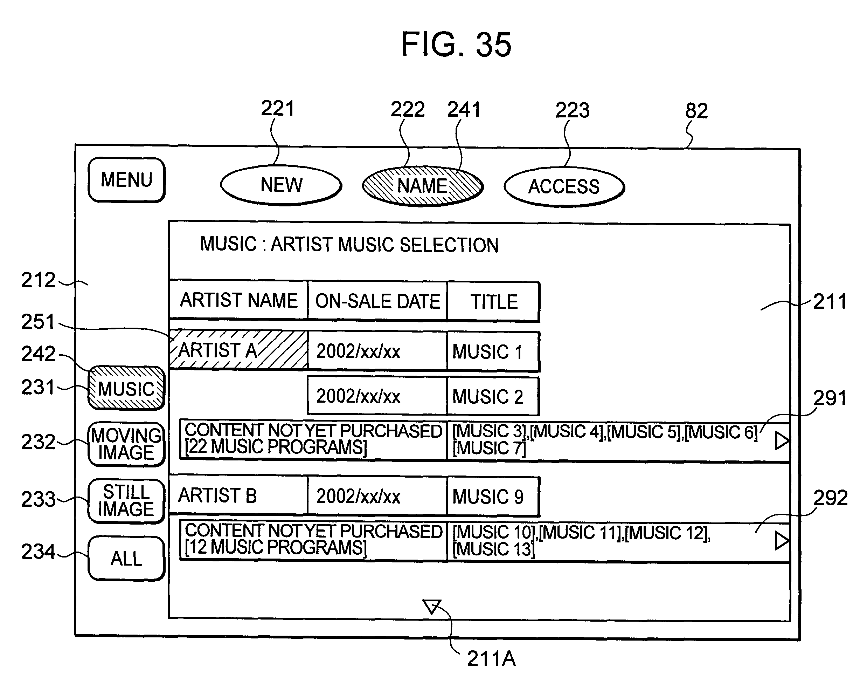

Fig. 35 is a diagram showing another display example of the music content purchase screen.

In the content selection/display area 211 shown in Fig. 35, contents of artist A and artist B already purchased are displayed and contents of the artists A and B not yet purchased are displayed in windows 291 and 292, respectively.

In the example shown in Fig. 35, music contents [music 1] and [music 2] of the artist A and music content [music 9] of the artist B are shown as contents already purchased by the user. The contents of the artist A not yet purchased are twenty two programs in total, including [music 3], [music 4], [music 5], [music 6] and [music 7] displayed in the window 291. The contents of the artist B not yet purchased are twelve programs in total, including [music 10], [music 11], [music 12] and [music 13] displayed in the window 292.

The contents are displayed in accordance with, for example, the search results (titles displayed in the windows 291 and 292) obtained by the information managing apparatus by using the music contents not yet purchased as the additional information, and the information on the music contents already purchased by a user. For example, the information on the music contents already purchased is managed by the view history storing unit 185.

At the purchase site shown in Fig. 35, a user can select music content to purchase, from the contents not yet purchased.

As descried above, a user can efficiently and quickly select content to purchase, also by displaying lists of contents of a plurality of artists already purchased and not yet purchased, in the music content purchase screen.

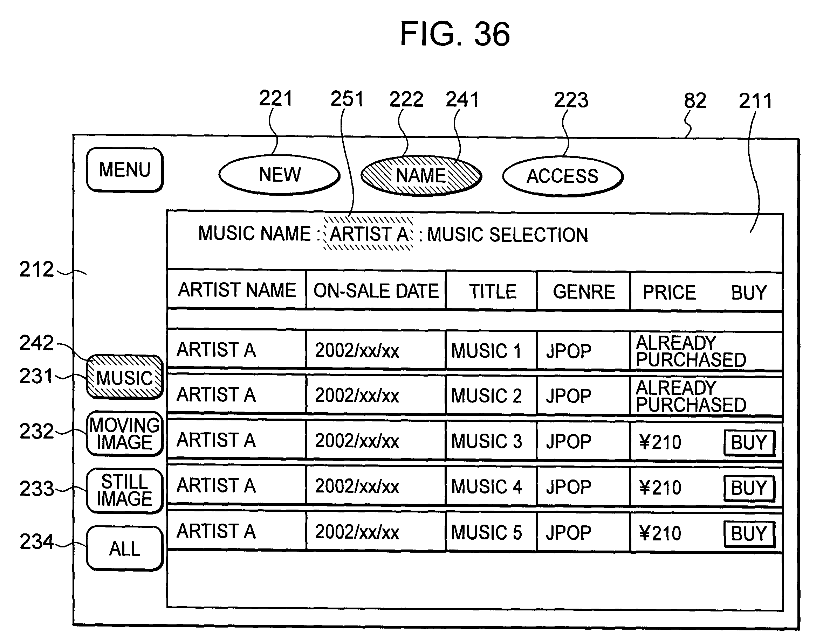

Fig. 36 is a diagram showing another display example of the music contents of the artist A shown in Fig. 35.

In the example shown in Fig. 36, only the contents of the artist A are displayed in a list, an indication of already purchased is displayed to the right of each of the already purchased music contents [music 1] and [music 2]. An indication of not yet purchased is displayed to the right of each of the other music contents [music 3], [music 4] and [music 5].

In this manner, various display types of the purchase screen are possible.

In the above, the display of the selection screen regarding music contents has been mainly described. Similarly, selection screens of moving image contents and still image contents are also displayed on the display 82.

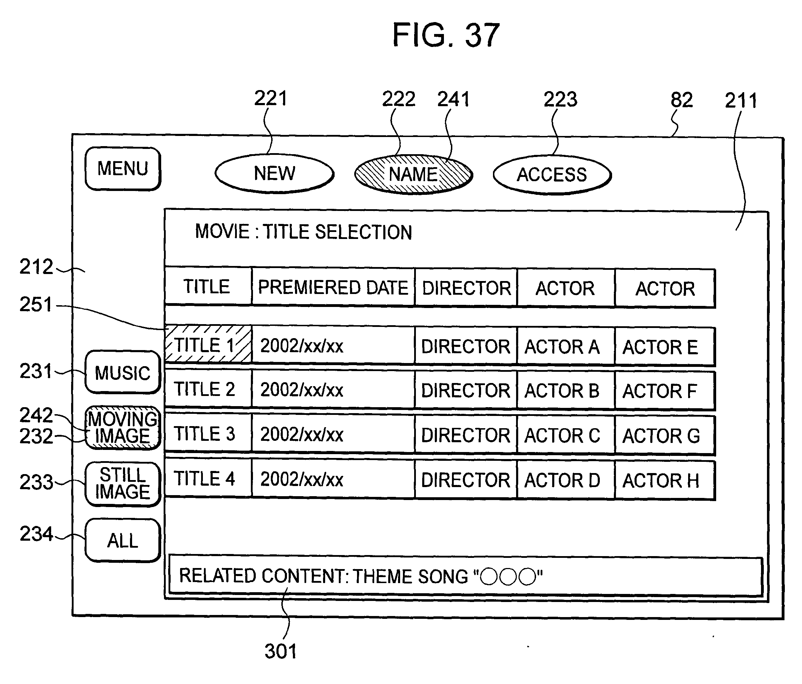

Fig. 37 is a diagram showing a display example of the selection screen of moving image contents.

In the selection screen shown in Fig. 37, the moving image button 232 is selected with the cursor 242, and a list (moving image contents having title names [title 1], [title 2], [title 3] and [title 4] affixed) of moving image contents (movie) stored, for example, in the storing unit 83, is displayed in the content selection/display area 211. Information on a title, a premiered date, a director name, and actors is displayed as the information on each moving image content.

In the example shown in Fig. 37, in a window 301 in a lower area of the content selection/display area 211, information on related content extracted in accordance with the key information selected by a user is displayed. For example, if a title of a movie is selected as the key information, displayed information includes a theme song of the movie, a sound track, a sale site of movie related goods and the like.

By selecting the related content displayed in the window 301, for example, a user can play the related content or purchase the related content or related goods. Namely, in the selection screen of Fig. 37, by moving the cursor 251 to the main theme song displayed in the window 301 and instructing to play it, a user can play the music content of the theme song which is related content of the movie [title 1].

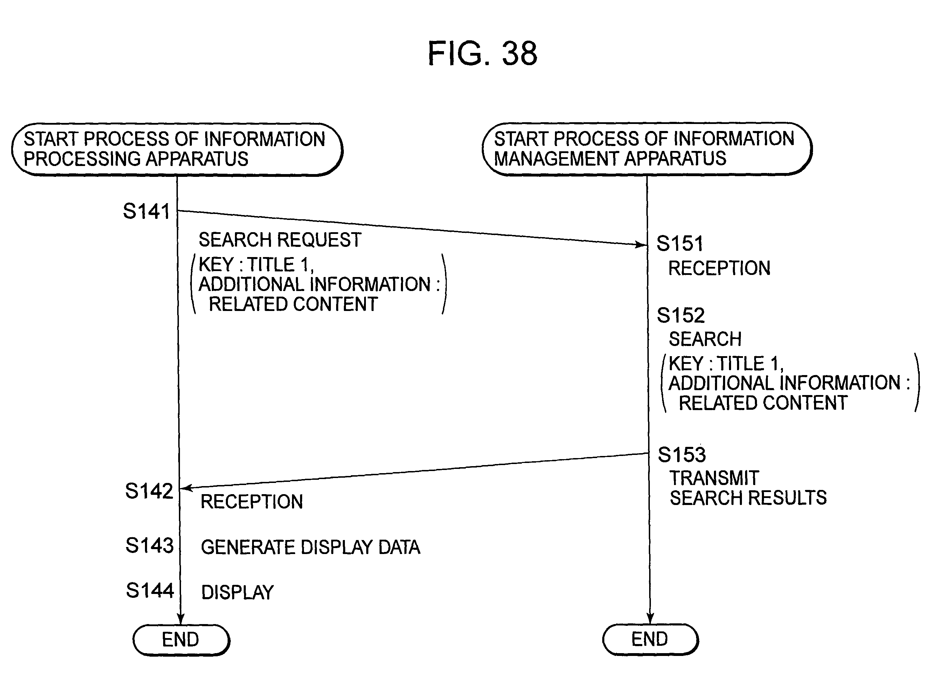

Next, with reference to a flowchart shown in Fig. 38, description will be made on a process to be executed between the information processing apparatus 62 and the information managing apparatus when related content is displayed in the window 301. The process shown in Fig. 38 is basically similar to the process shown in Fig. 28 and other drawings, excepting that key information and additional information is different.

For example, as shown in Fig. 37, when the [title 1] is selected with the active cursor 251, at Step S141 a search request containing the key information [title 1] and the additional information [related content] is transmitted from the information processing apparatus to the information managing apparatus to request for searching for related content whose metadata contains the [title 1]. At this time, searching for the related content whose metadata contains the [title 1] is performed at the external storage device 63 and the internal database, and when necessary also at the home server 64 and the Internet server 53.

At Step S151 the request from the information processing apparatus 62 is received at the information managing unit, and at Step S152 a content search is performed on the basis of the key information and the additional information notified from the information processing apparatus 62. The content whose metadata contains the [title 1] is therefore extracted as the related content. At Step S153 search result including the information on the extracted content is transmitted to the information processing apparatus 62.

At Step S142 the search result transmitted from the information managing apparatus is received at the communication control unit 181, and at Step S143 the display data generating unit 123 generates display data from the search result. At Step S144, the related contents are displayed in the window 301 in accordance with the generated display data.

The above-described processes are executed each time the cursor 251 is moved, and information on the related content selected with the cursor 251 is sequentially displayed in the window 301.

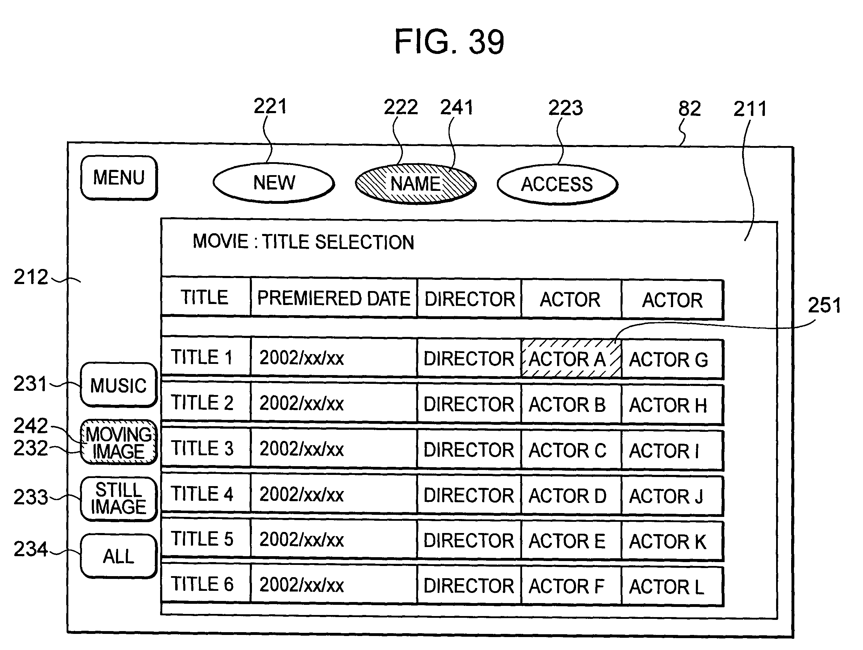

Fig. 39 is a diagram showing another display example of the moving image content selection screen.

Moving image contents of the title 1 to title 6 extracted by a search are displayed in the content selection/display area 211. Information on the title, premiered date, director name and actors of each of the moving image contents is displayed as information on each moving image content.

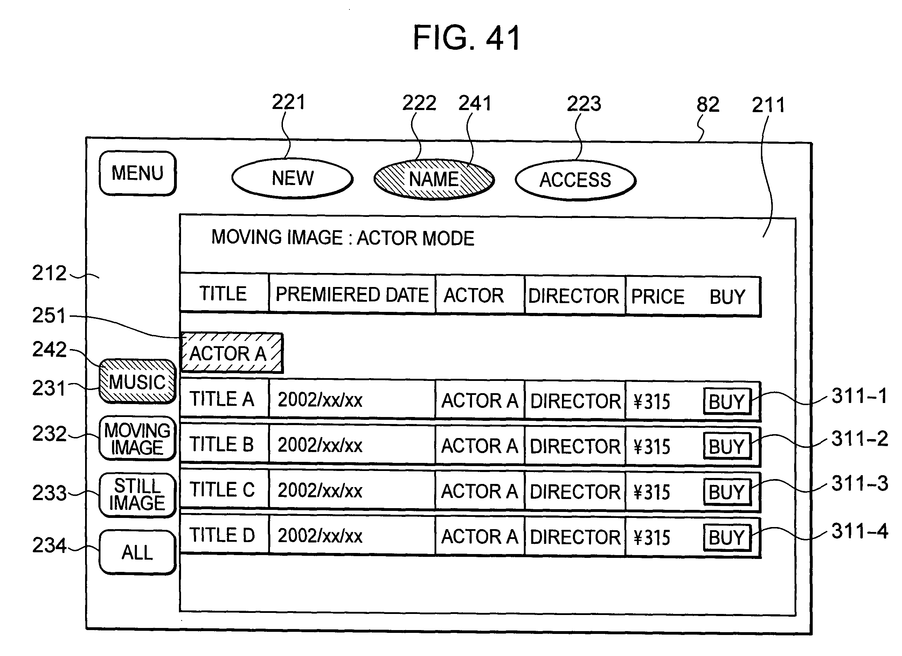

In the state that the screen of Fig. 39 is displayed, by moving the cursor 251 to change the category, a user can purchase at a content sale site other content in which a favorite actor plays as shown in Fig. 41. In the example shown in Fig. 39, [actor A] playing in the moving image content of the title 1 is selected with the cursor 251.

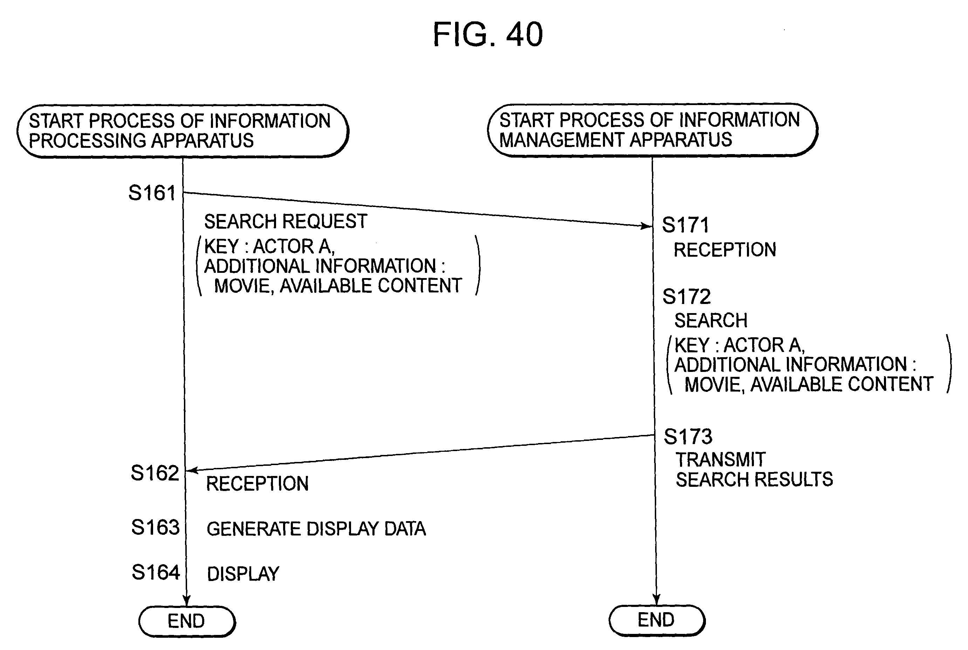

Next, with reference to a flowchart shown in Fig. 40, description will be made on a process to be executed between the information processing apparatus 62 and the information managing apparatus when the selection screen (purchase screen) of other content in which the actor selected in the selection screen of Fig. 39 plays, is displayed. The process shown in Fig. 40 is basically similar to the process shown in Fig. 28 and other drawings, excepting that key information and additional information for a search is different.

For example, as shown in Fig. 39, as the [actor A] playing in the moving image content of the title 1 is selected with the active cursor 251 and it is instructed by a predetermined operation to purchase other moving image content in which the [actor A] plays, at Step S161 the control unit 121 controls the communication control unit 181 to transmit a search request containing the key information [actor A] and the additional information [movie, available content] to the information managing apparatus.

At Step S171 the request from the information processing apparatus 62 is received at the information managing apparatus, and at Step S172 a content search is performed in accordance with the key information and the additional information notified from the information processing apparatus 62. Available moving image content (movie) whose metadata contains the [actor A] is therefore extracted. At Step S173 search results containing information on the extracted content are transmitted to the information processing apparatus 62.

At Step S162 the search result transmitted from the information managing apparatus is received at the communication control unit 181. At Step S163 the display data generating unit 123 generates display data in accordance with the search result. At Step S164, the purchase screen for the moving image content in which the [actor A] plays is displayed in the content selection/display area 211.

Fig. 41 is a diagram showing a display example of the purchase screen for other content in which the [actor A] plays.

For example, the purchase screen displayed at Step S164 displays contents [title A] to [title D] in which the [actor A] plays, and a title, a premiered date, an actor (actor A), a director name, a price (315 yen) respectively as information on each content, and buy buttons 311-1 to 311-4 to be operated at the time of instructing to purchase the content. A user can purchase (download) the content in which the [actor A] plays by operating the buy buttons 311-1 to 311-4.

As described above, the user can display the selection screen of each of various categories and change the display of the selection screen by moving the cursor.

In the above description, although the key information and the additional information is stored in the information processing apparatus 62, the information may be stored in the Internet server 53 and the home server 64 and managed in correspondence with identification information such as a user ID. In this case, a search request from the information processing apparatus 62 to the Internet server 53 and the home server 64 contains the identification information, and the Internet server 53 and the home server 64 acquire the key information and the additional information by using the identification information to perform a search.

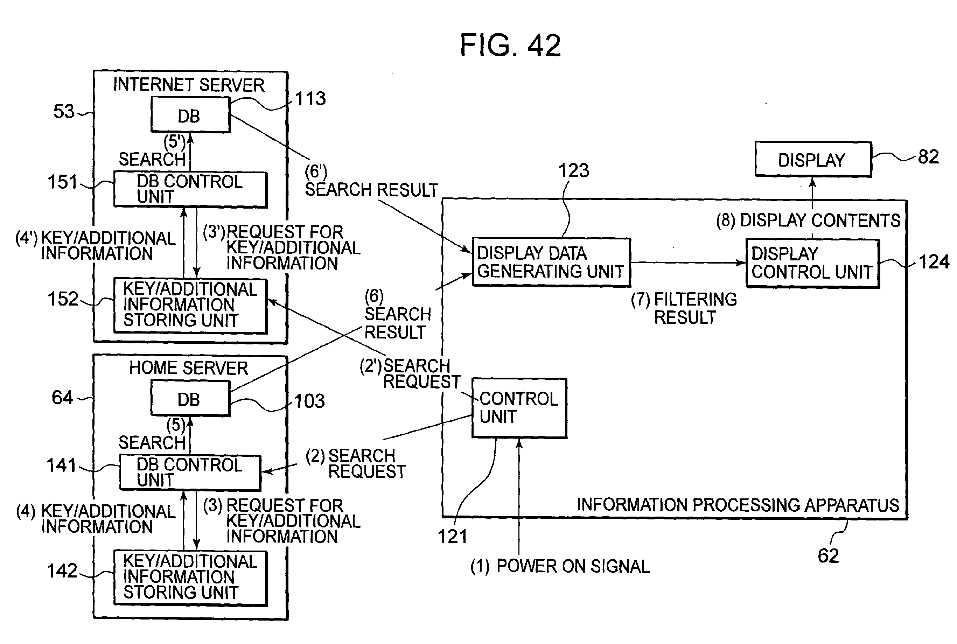

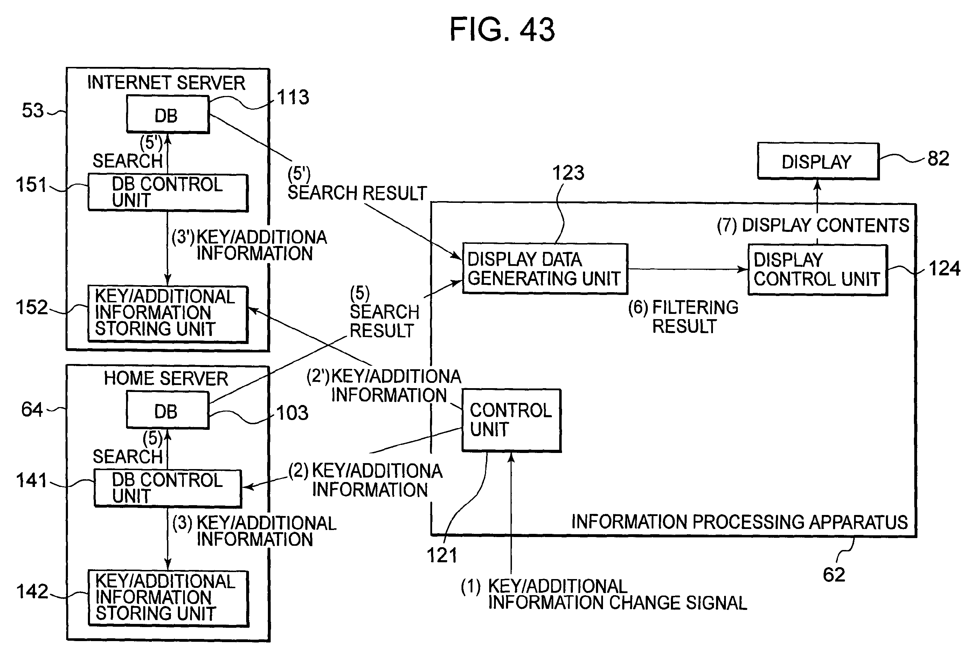

Figs. 42 and 43 are diagrams illustrating examples of operations of a content providing system to be used in a manner described above. Fig. 42 corresponds to Fig. 6 and illustrates a start-up operation example. Fig. 43 corresponds to Fig. 9 and illustrates an operation example when the key information and the additional information are changed.

Namely, in Figs. 42 and 43, a key/additional information storing unit 142 is provided in the home server 64, and a key/additional information storing unit 152 is provided in the Internet server 113.

In Fig. 42, when it is instructed to turn on a power (arrow (1) in Fig. 42), the control unit 121 requests the home server 64 to search contents (arrow (2)). This request contains also identification information of the information processing apparatus 62.

The database control unit 141 of the home server 64 requests (arrow (3)) the key/additional information storing unit 122 to notify key information and additional information registered in correspondence with the identification information notified from the information processing apparatus 62, and acquires (arrow (4)) the key information and the additional information notified in response to the request. Since the subsequent processes are similar to those described with reference to Fig. 6, the detailed description thereof is omitted.

Similarly, in the Internet server 113, the key information and the additional information are acquired in accordance with the identification information contained in the search request from the information processing apparatus 62, and the subsequent processes are performed in accordance with the acquired key information and additional information.

When a change in the key information and the additional information is detected (arrow (1) in Fig. 43), the control unit 121 shown in Fig. 43 notifies (arrow (2)) the home server 64 of a search request containing the identification information of the information processing apparatus 62 and the changed key information and additional information.

The database control unit 141 of the home server 64 changes (arrow (3)) the key information and the additional information registered in correspondence with the identification information notified from the information processing apparatus 62 to newly notified key information and additional information, and performs a subsequent search process described with reference to Fig. 9, in accordance with the notified key information and additional information. Similarly in the Internet server 113, the already registered key information and additional information is changed in accordance with the key information and the additional information contained in the search request from the information processing apparatus 62, and the subsequent search process is performed in accordance with the notified key information and additional information.

In the above description, although a user selects an artist name and a title of music content, an actor name of moving image content and the like, as the metadata to be set to the key information, any information on content may be used to be disposed (displayed) in the content selection screen. For example, a content on-sale date, a sales agency name, a genre (in the case of music content, [classic], [pops] [jazz], etc.) may be selected as the key information. A content type (paid content, free content, a CD (Compact Disc), a CD single, a DVD (Digital Versatile Disc), a location of content) or the like may be selected as the additional information to designate the search range in accordance with the additional information.

The above-described information processing apparatus 62 may be structured not only by a personal computer but also by a television, a PDA (Personal Digital Assistants), or a mobile phone.

Although it is possible to realize the above-described series of processes by hardware, it is also possible to realize them by software.

In a case where a series of processes are to be realized by software, the program constituting the software is installed from a network or a recording medium in a computer assembled with dedicated hardware, or in a general personal computer capable of executing various functions by installing various programs, or the like.

As shown in Fig. 10, the recording medium may be structured not only as package media made up of the magnetic disk 170 (including a flexible disk); the optical disc 171 (including a CD-ROM (Compact Disk-Read Only Memory) and a DVD); the magnetic optical disc 172 (including an MD (registered trademark) (Mini-Disk); or the semiconductor memory 173, which records the program and is distributed to users to supply the program to the user, separately from the apparatus main body, but also as the ROM 161, a hard disk in the storing unit 83 or the like, which records the program to be distributed to users and assembled in advance in the apparatus main body.

In this specification, steps describing the program provided by a recording medium contain not only a process to be executed time sequentially in the order described in the specification but also a process to be executed parallel or independently without being processed time sequentially.

In this specification, a system is the whole apparatus constituted of a plurality of apparatuses.

### INDUSTRIAL APPLICABILITY

According to the present invention, a user can select content to be viewed, on a content selection screen.

Further, according to the present invention, a user can select favorite content efficiently and quickly.

Furthermore, according to the present invention, a user can restrain himself/herself from buying different content erroneously.

## Claims

1. An information processing apparatus for controlling an output of predetermined content, **characterized by** having:
display control means that displays a selection screen for said content in which metadata as data affixed to said content is disposed, said selection screen having at least an area in which the metadata for designating an information acquisition range is arranged and an area to be used for designation of other metadata and display of a search result;
acquiring means that acquires, when predetermined one of said metadata is selected from said selection screen displayed by said display control means, information on other content having same metadata as said selected metadata; and
output means that displays said information acquired by said acquiring means and outputs said other content in response to an instruction of an output of said other content.

2. The information processing apparatus according to claim 1, **characterized by** further having:
storing means that stores said metadata selected from said selection screen, and
**characterized in that**, when said information processing apparatus is activated, said acquiring means acquires information on said other content having same metadata as said metadata stored in said storing means.

3. The information processing apparatus according to claim 1, **characterized in that**, when said metadata for designating the information acquisition range is selected, said acquiring means acquires information on said other content in a range designated by said selected metadata.

4. The information processing apparatus according to claim 1, **characterized by** further having:
detecting means for detecting a selection of said metadata, and
**characterized in that** said detecting means detects a selection of said metadata in response to a motion of a cursor displayed on said selection screen.

5. The information processing apparatus according to claim 1, **characterized in that** said acquiring means acquires information on said other content from an information managing apparatus connected via a network.

6. The information processing apparatus according to claim 5, **characterized in that** when said information processing apparatus is activated, said acquiring means acquires information on other content having same metadata as said metadata recorded in storing means of said information managing apparatus.

7. An information processing method for an information processing apparatus for controlling an output of predetermined content, **characterized by** including:
a display control step of displaying a selection screen for said content in which metadata as data affixed to said content is disposed, said selection screen having at least an area in which the metadata for designating an information acquisition range is arranged and an area to be used for designation of other metadata and display of a search result;
an acquiring step of, when predetermined one of said metadata is selected from said selection screen displayed in said display control step, acquiring information on other content having same metadata as said selected metadata; and
an output step of displaying said information acquired by said acquiring step and outputting said other content in response to an instruction of an output of said other content.

8. A program for making a computer execute a process of controlling an output of predetermined content, **characterized by** including:
a display control step of displaying a selection screen for said content in which metadata as data affixed to said content is disposed, said selection screen having at least an area in which the metadata for designating an information acquisition range is arranged and an area to be used for designation of other metadata and display of a search result;
an acquiring step of, when predetermined one of said metadata is selected from said selection screen displayed in said display control step, acquiring information on other content having same metadata as said selected metadata; and
an output step of displaying said information acquired by said acquiring step and outputting said other content in response to an instruction of an output of said other content.

## Amended claims

### Amended claims under Art. 19.1 PCT

**1.** (amended) An information processing apparatus for searching for predetermined content and controlling an output of said content, **characterized by** having:
display control means that displays a selection screen for said content in which metadata as data affixed to said content is disposed, said selection screen **characterized by** comprising at least a first area in which the metadata for designating an information acquisition range is arranged, a second area to be used for displaying metadata used as a search criterion and a search result, and a third area to be used for designating a display order of a list of search results, wherein said search results are displayed in accordance with the display order designated in said third area and said content is selected in said second area;
acquiring means that, when predetermined one of said metadata as said search criterion is selected in said second area on said selection screen displayed by said display control means and when predetermined metadata for designating said information acquisition range is selected in said first area, acquires information on other content having same metadata as said selected metadata as said search criterion, in a range of said metadata for designating said information acquisition range; and
output means that outputs said other content, in response to an instruction to output said other content selected in said second area on said selection screen.

**2.** The information processing apparatus according to claim 1, **characterized by** further having:
storing means that stores said metadata selected from said selection screen, and
**characterized in that**, when said information processing apparatus is activated, said acquiring means acquires information on said other content having same metadata as said metadata stored in said storing means.

**3.** (cancelled)

**4.** The information processing apparatus according to claim 1, **characterized by** further having:
detecting means for detecting a selection of said metadata, and
**characterized in that** said detecting means detects a selection of said metadata in response to a motion of a cursor displayed on said selection screen.

**5.** The information processing apparatus according to claim 1, **characterized in that** said acquiring means acquires information on said other content from an information managing apparatus connected via a network.

**6.** The information processing apparatus according to claim 5, **characterized in that** when said information processing apparatus is activated, said acquiring means acquires information on other content having same metadata as said metadata recorded in storing means of said information managing apparatus.

**7.** (amended) An information processing method for an information processing apparatus for searching for predetermined content and controlling an output of said content, **characterized by** including:
a display control step of displaying a selection screen for said content in which metadata as data affixed to said content is disposed, said selection screen having at least a first area in which the metadata for designating an information acquisition range is arranged, a second area to be used for displaying metadata used as a search criterion and a search result, and a third area to be used for designating a display order of a list of search results, and **characterized in that** said search results are displayed in accordance with the display order designated in said third area and said content is selected in said second area;
an acquiring step of, when predetermined one of said metadata as said search criterion is selected in said second area on said selection screen displayed in said display control step and when predetermined metadata for designating said information acquisition range is selected in said first area, acquiring information on other content having same metadata as said selected metadata as said search criterion, in a range of said metadata for designating said information acquisition range; and
an output step of outputting said other content in response to an instruction to output said other content selected in said second area on said selection screen.

**8.** (amended) A program for making a computer search for predetermined content and control an output of said content, **characterized by** including:
a display control step of displaying a selection screen for said content in which metadata as data affixed to said content is disposed, said selection screen having at least a first area in which the metadata for designating an information acquisition range is arranged, a second area to be used for displaying metadata used as a search criterion and a search result, and a third area to be used for designating a display order of a list of search results, and **characterized in that** said search results are displayed in accordance with the display order designated in said third area and said content is selected in said second area;
an acquiring step of, when predetermined one of said metadata as said search criterion is selected in said second area on said selection screen displayed in said display control step and when predetermined metadata for designating said information acquisition range is selected in said first area, acquiring information on other content having same metadata as said selected metadata as said search criterion, in a range of said metadata for designating said information acquisition range; and
an output step of outputting said other content in response to an instruction to output said other content selected in said second area on said selection screen.

Statement under Art. 19.1 PCT
It is made apparent according to the amendment to Claims 1, 7 and 8 that first to third areas are formed on a selection screen and search results is displayed on the second area in accordance with a display order designated in the third area.

"Mamoru HARADA, Flood of Home Music Servers Using HDDs, Nikkei Electronics, No. 763, February 14, 2000, pp. 63-70" (hereinafter, referred to as Cited Document 1) discloses content search making use of GUI.

Japanese Published Patent Application (KOKAI) 2002-14989 (hereinafter, referred to as Cited Document 2) discloses a technique for searching a multimedia document having a classified element selected by a user as an attribute making use of a navigation tree having a hierarchical structure.

Japanese Published Patent Application (KOKAI) 2001-331184 (hereinafter, referred to as Cited Document 3) discloses a technique for displaying related information of music or an artist thereof while playing back the music.

However, none of Cited Documents 1-3 disclose how to display the search results, that is, the configuration of the present invention according to Claims 1, 7 and 8, for displaying the search results in accordance with the display order designated in the third area.

Accordingly, it is possible for the user to enables designating a display order of the search results, however, the inventions disclosed in Cited Documents 1-3 cannot realize such an advantage. This is also applicable in a case of combinations of the inventions of Cited Documents 1-3.

It is noted that the amendments to Claims 1, 7 and 8 are supported by descriptions in the Japanese Specification lines 15-22, page 20, lines 26-27, page 24 and lines 20-25, page 25.
